(19) **Europäisches Patentamt / European Patent Office / Office européen des brevets**

(11) **EP 4 529 110 A1**

(12) **EUROPEAN PATENT APPLICATION**
published in accordance with Art. 153(4) EPC

(43) Date of publication:
**26.03.2025 Bulletin 2025/13**

(21) Application number: **23824100.4**

(22) Date of filing: **16.05.2023**

(51) International Patent Classification (IPC):
***H04L 27/26*** (2006.01)

(52) Cooperative Patent Classification (CPC):
**H04L 27/26**

(86) International application number:
**PCT/KR2023/006644**

(87) International publication number:
**WO 2023/243876 (21.12.2023 Gazette 2023/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.06.2022 KR 20220074315
29.06.2022 KR 20220080072**

(71) Applicant: **Samsung Electronics Co., Ltd.
Suwon-si, Gyeonggi-do 16677 (KR)**

(72) Inventors:
• **SHIM, Seijoon
Suwon-si Gyeonggi-do 16677 (KR)**
• **PARK, Byungjoon
Suwon-si Gyeonggi-do 16677 (KR)**
• **LIM, Hyoungjin
Suwon-si Gyeonggi-do 16677 (KR)**

(74) Representative: **HGF
HGF Limited
1 City Walk
Leeds LS11 9DX (GB)**

(54) **ELECTRONIC DEVICE AND METHOD FOR PROVIDING FREQUENCY OFFSET IN FRONTHAUL INTERFACE**

(57) According to embodiments, a method performed by a radio unit (RU) may comprise an operation of receiving, from a distributed unit (DU), a control plane (C-plane) message including frame structure information for indicating frequency offset information and a subcarrier spacing (SCS). The method may comprise an operation of identifying a frequency offset factor from among a plurality of frequency offset factors. The method may comprise an operation of obtaining a frequency offset value corresponding to a product of the frequency offset information, the SCS, and the frequency offset factor. The method may comprise an operation of transmitting a downlink signal on the basis of the frequency offset value. The plurality of frequency offset factors may include 0.5 and 0.25.

FIG. 5

**Description**

**[Technical Field]**

The disclosure generally relates to a fronthaul interface. More particularly, the disclosure relates to an electronic device and a method for providing a frequency offset in a fronthaul interface.

**[Background Technology]**

As the transmission capacity increases in wireless communication systems, a function split for functionally separating their base stations is being applied. According to such a function split, the base stations may be separated into a DU (distributed unit) and an RU (radio unit). A fronthaul interface is typically defined for communication between the DU and the RU.

The above information is presented as background information simply to assist with an understanding of the disclosure. No determination has been made, and no assertion is made, as to whether any of the above might be applicable as prior art with regard to the disclosure.

**[Detailed Description of Invention]**

**[Technical Solution]**

According to embodiments, a method performed by a radio unit (RU) may comprise receiving, from a distributed unit (DU), a control plane (C-plane) message including frequency offset information and frame structure information for indicating a subcarrier spacing (SCS). The method may comprise identifying a frequency offset factor among a plurality of frequency offset factors. The method may comprise obtaining a frequency offset value corresponding to a product of the frequency offset information, the SCS, and the frequency offset factor. The method may comprise transmitting downlink signals based on the frequency offset value. The plurality of frequency offset factors may include '0.5' and '0.25'.

According to embodiments, a method performed by a distributed unit (DU) may comprise determining frequency offset information related to a frequency offset factor among a plurality of frequency offset factors. The method may comprise transmitting, to a radio unit (RU), a control plane (C-plane) message including section information for downlink signals, the frequency offset information, and frame structure information for indicating a subcarrier spacing (SCS). The frequency offset factor may be provided to the RU by a management plane (M-plane) message or the C-plane message. The frequency offset value applied to the downlink signals may correspond to a product of the frequency offset information, the SCS, and the frequency offset factor. The plurality of frequency offset factors may include '0.5' and '0.25'.

According to embodiments, an electronic device of a radio unit (RU) may comprise at least one fronthaul transceiver, at least one radio frequency (RF) transceiver, at least one processor coupled to the at least one fronthaul transceiver and the at least one RF transceiver. The at least one processor may be configured to receive, from a distributed unit (DU), a control plane (C-plane) message including frequency offset information and frame structure information for indicating a subcarrier spacing (SCS). The at least one processor may be configured to identify a frequency offset factor among a plurality of frequency offset factors. The at least one processor may be configured to obtain a frequency offset value corresponding to a product of the frequency offset information, the SCS, and the frequency offset factor. The at least one processor may be configured to transmit downlink signals based on the frequency offset value. The plurality of frequency offset factors may include '0.5' and '0.25'.

According to embodiments, an electronic device of a distributed unit (DU) may comprise at least one transceiver and at least one processor coupled to the at least one transceiver. The at least one processor may be configured to determine frequency offset information related to a frequency offset factor among a plurality of frequency offset factors. The at least one processor may be configured to transmit, to a radio unit (RU), a control plane (C-plane) message including section information for downlink signals, the frequency offset information, and frame structure information for indicating a subcarrier spacing (SCS). The frequency offset factor may be provided to the RU by a management plane (M-plane) message or the C-plane message. The frequency offset value applied to the downlink signals may correspond to a product of the frequency offset information, the SCS, and the frequency offset factor. The plurality of frequency offset factors may include '0.5' and '0.25'

**[Brief Description of Drawings]**

FIG. 1 illustrates a wireless communication system according to embodiments.

FIG. 2A illustrates a fronthaul interface according to embodiments.

FIG. 2B illustrates an open-radio access network (ORAN) fronthaul interface according to embodiments.

FIG. 3A illustrates a functional configuration of a distributed unit (DU) according to embodiments.

FIG. 3B illustrates a functional configuration of a radio unit (RU) according to embodiments.

FIG. 4 illustrates an example of a function split between a DU and an RU according to embodiments.

FIG. 5 represents a difference in raster units between ARFCN (absolute radio frequency channel number) and GSCN (global synchronization channel number) according to embodiments.

FIG. 6 illustrates an example of offset compensation of a synchronization signal block (SSB) having a center frequency different from a center frequency of a bandwidth, according to embodiments.

FIG. 7 illustrates an example of a control plane (C-plane) message according to embodiments.

FIG. 8 illustrates an example of section extension information according to embodiments.

FIG. 9A illustrates an example of signaling between a DU and an RU to provide a frequency offset using a frequency offset factor through a management plane (M-plane) message and a C-plane message, according to embodiments.

FIG. 9B illustrates an example of signaling between a DU and an RU for providing a frequency offset using a frequency offset factor through a C-plane message, according to embodiments.

FIG. 10 illustrates an example of signal processing of an RU in mixed numerology channels according to embodiments.

## [Mode For Carrying Out Invention]

Hereinafter, the terms used in the disclosure are merely used to better describe a certain embodiment and may not be intended to limit the scope of other embodiments. A singular expression may include a plural expression, unless the context clearly dictates otherwise. The terms used herein, including technical and scientific terms, may have the same meanings as those commonly understood by those skilled in the art to which the disclosure pertains. Terms defined in a general dictionary among the terms used in the disclosure may be interpreted as having the same or similar meaning as those in the context of the related art, and they are not to be construed in an ideal or overly formal sense, unless explicitly defined in the disclosure. In some cases, even the terms defined in the disclosure may not be interpreted to exclude embodiments of the disclosure.

In various examples of the disclosure described below, a hardware approach will be described as an example. However, since various embodiments of the disclosure may include a technology that utilizes both the hardware-based approach and the software-based approach, the various embodiments are not intended to exclude the software-based approach.

As used in the following description, the term referring to merging (e.g., merging, grouping, combination, aggregation, join, integration, unifying), the term referring to a signal (e.g., packet, message, signal, information, signaling), the term referring to a resource (e.g., section, symbol, slot, subframe, radio frame, subcarrier, resource element (RE), resource block (RB), bandwidth part (BWP), occasion), the term referring to an operation state (e.g., step, operation, procedure), the term referring to data (e.g., packet, message, user stream, information, bit, symbol, symbol, codeword), the term referring to a channel, the term referring to network entities (e.g., distributed unit (DU), radio unit (RU), control unit (CU), control plane (CU-CP), user plane (CU-UP), O-DU(O-RAN(open radio access network) DU), O-RU(O-RAN RU), O-CU(O-RAN CU), O-CU-UP(O-RAN CU-CP), O-CU-CP(O-RAN CU-CP)), the terms referring to components of a device and so on are exemplified for convenience of explanation. Therefore, the disclosure is not limited to the terms described below, and other terms having equivalent technical meanings may be used therefor. Further, as used hereinafter, the terms such as e.g., '~ portion', '~ part', '~ unit', '~ module', '~ body' or the like may refer to at least one shape of structure or a unit for processing a certain function.

Throughout the disclosure, an expression such as e.g., 'more than' or 'less than" may be used to determine whether a specific condition is satisfied or fulfilled or not, but it is merely of a description for expressing an example and is not intended to exclude the meaning of 'more than or equal to' or 'less than or equal to'. A condition described as 'more than or equal to' may be replaced with 'more than', a condition described as 'less than or equal to' may be replaced with 'less than', and a condition described as 'more than or equal to and less than" may be replaced with 'more than and less than or equal to', respectively. Further, hereinafter, 'A' to 'B' may refer to at least one of the elements from A (including A) to B (including B). Hereinafter, 'C' and/or 'D' may refer to including at least one of 'C' or 'D', that is, {'C', 'D', or 'C' and 'D'}.

While the disclosure describes various embodiments using terms used in some communication standards (e.g., 3GPP(3rd Generation Partnership Project), xRAN(extensible radio access network), O-RAN(open-radio access network), they are only of an example for description. Various embodiments of the disclosure may be easily modified and applied to other communication systems.

The disclosure provides an electronic device and a method for providing more precise units of frequency offsets.

Further, the disclosure provides a device and a method for adaptively adjusting a frequency offset factor that is a unit for expressing a frequency offset on a fronthaul interface.

Further, the disclosure provides an electronic device and a method for compensating for a difference in raster units between ARFCN (absolute radio frequency channel number) and GSCN (global synchronization channel number) on a fronthaul interface.

Further, the disclosure provides a device and a method for providing a frequency offset factor through a management plane (M-plane) message on a fronthaul interface.

Further, the disclosure provides a device and a method for providing a frequency offset factor through a control plane (C-plane) message on a fronthaul interface.

An electronic device and a method according to embodiments of the disclosure, numerology can more accurately compensate for a frequency offset between channels having different numerology, by adaptively adjusting the frequency offset factor on the fronthaul interface.

The effects that can be obtained from the disclosure are not limited to those mentioned above, and other effects not mentioned herein may be clearly understood by those having ordinary knowledge in the technical field to which the disclosure belongs from the following description.

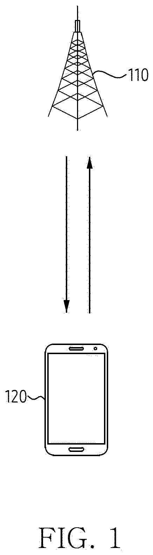

FIG. 1 illustrates a wireless communication system according to embodiments.

Referring to FIG. 1, FIG. 1 illustrates a base station 110 and a terminal 120 as a part of nodes using a wireless channel in a wireless communication system. While FIG. 1 illustrates only one base station, the wireless communication system may further include another base station that is the same as or similar to the base station 110.

The base station 110 is a network infrastructure for providing wireless access to the terminal 120. The base station 110 has coverage defined based on a distance capable of transmitting signals. In addition to the term 'base station', the base station 110 may be referred to as 'access point (AP)', 'eNodeB (eNB)', '5th generation node (5G node)', 'next generation nodeB (gNB)', 'wireless point', 'transmission/reception point (TRP)', or other terms having a technical meaning equivalent thereto.

The terminal 120 is a device used by a user and performs communication with the base station 110 over a wireless channel. A link from the base station 110 to the terminal 120 is referred to as downlink (DL), and a link from the terminal 120 to the base station 110 is referred to as uplink (UL). Further, although not shown in FIG. 1, the terminal 120 and another terminal may perform communication with each other over a wireless channel. In this case, a device-to-device (D2D) link between the terminal 120 and the other terminal may be referred to as a sidelink, and the sidelink may be used interchangeably with a PC5 interface. In some other embodiments, the terminal 120 may operate without any user involvement. According to an embodiment, the terminal 120 is a device that performs machine type communication (MTC) and may not be carried by a user. Further, according to an embodiment, the terminal 120 may be a narrowband (NB) Internet of things (IoT) device.

In addition to the term 'terminal', the terminal 120 may be referred to as 'user equipment (UE)', 'customer premises equipment (CPE)', 'mobile station', 'subscriber station', 'remote terminal', 'wireless terminal', 'electronic device', 'user device' or other terms having substantially the same technical meaning thereto.

The base station 110 may perform beamforming with the terminal 120. The base station 110 and the terminal 120 may transmit and receive wireless signals in a relatively low frequency band (e.g., frequency range 1 (FR 1) of NR). In addition, the base station 110 and the terminal 120 may transmit and receive wireless signals in a relatively high frequency band (e.g., FR 2 (or, FR 2-1 and FR 2-1) of NR, and in a millimeter wave band (e.g., 28 GHz, 30 GHz, 38 GHz, and 60 GHz). To improve the channel gain, the base station 110 and the terminal 120 may perform beamforming. Here, the beamforming may include transmission beamforming and reception beamforming. The base station 110 and the terminal 120 may assign directivity to transmission signals or reception signals. To this end, the base station 110 and the terminal 120 may select serving beams by means of a beam search or beam management procedure. After the serving beams are selected, subsequent communications may be performed using a resource that is in a QCL relationship with the resource that has transmitted the serving beams.

If the large-scale characteristics of a channel carrying a symbol on a first antenna port could be inferred from a channel carrying a symbol on a second antenna port, then the first antenna port and the second antenna port may be evaluated to be in a QCL relationship. For example, the large-scale characteristics may include at least one of e.g., delay spread, Doppler spread, Doppler shift, average gain, average delay, and spatial receiver parameter.

While FIG. 1 illustrates that both the base station 110 and the terminal 120 perform beamforming, but embodiments of the disclosure are not necessarily limited thereto. In some embodiments, the terminal may or may not perform beamforming. Further, the base station may or may not perform beamforming. That is to say , only one of the base station and the terminal may perform beamforming, or both the base station and the terminal may not perform beamforming.

In the disclosure, a term 'beam' refers to a spatial flow of signals in a wireless channel, and may be formed by one or more antennas (or antenna elements), and this formation process may be referred to as beamforming. The beamforming may include at least one of analog beamforming or digital beamforming (e.g., precoding). For example, a reference signal transmitted based on the beamforming may include a demodulation-reference signal (DM-RS), a channel state information-reference signal (CSI-RS), a synchronization signal/physical broadcast channel (SS/PBCH), and a sounding reference signal (SRS). In addition, an IE such as e.g., a CSI-RS resource or an SRS-resource may be used as a configuration for each reference signal, and such a configuration may include information associated with a beam. The information associated with the beam may mean whether the corresponding configuration (e.g., CSI-RS resources) uses the same spatial domain filter as another configuration (e.g., other CSI-RS resource in the same CSI-RS resource set) or uses a different spatial domain filter, or with which reference signal it is quasi-co-located (QCLed), and if QCLed, what type (e.g., QCL type A, B, C, or D) it is.

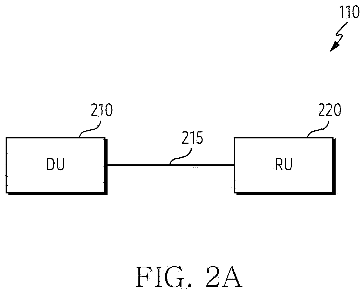

In a conventional communication system with a relatively large cell radius of a base station, each base station is installed such that the base station includes functions of a digital processing unit (or a distributed unit, DU) and a radio frequency (RF) processing unit (or a radio unit, RU). However, as a high frequency band is used in a 4G (4th generation) system and/or a subsequent communication system (e.g., 5G), and the cell coverage of a base station decreases, the number of base stations for covering a specific area increases. The operator's installation cost burden for installing these base stations has also increased. In order to minimize the installation cost of the base stations, a structure has been proposed in which a DU and an RU are separated with one or more RUs connected to one DU through a wired network, and one or more topographically distributed RUs are arranged to cover a specific area. Hereinafter, examples of the deployment structure and extension of the base station according to various embodiments of the disclosure are described with reference to FIGS. 2A to 2B.

FIG. 2A illustrates a fronthaul interface according to embodiments. Unlike a backhaul between a base station and a core network, a fronthaul refers to between entities between a wireless radio access network (RAN) and a base station. Although FIG. 2A illustrates an example of a fronthaul structure between one RU 220 and one DU 210, it is only for convenience of description and the disclosure is not limited thereto. In other words, an embodiment of the disclosure may be applied to a fronthaul structure between one DU and a plurality of RUs. For example, an embodiment of the disclosure may be applied to a fronthaul structure between one DU and two RUs. Furthermore, an embodiment of the disclosure may be applied to a fronthaul structure between one DU and three RUs.

Referring to FIG. 2A, the base station 110 may include a DU 210 and an RU 220. A fronthaul 215 positioned between the DU 210 and the RU 220 may be operated via an Fx interface. For the operation of the fronthaul 215, for example, an interface such as an enhanced common public radio interface (eCPRI), a radio over Ethernet (ROE), or the like may be used.

As communication technologies further develop, the mobile data traffic increases and then the bandwidth requirements needed for fronthaul between a digital unit and a radio unit have increased significantly. In a deployment such as centralized/cloud radio access network (C-RAN), DUs may be implemented to perform functions for packet data convergence protocol (PDCP), radio link control (RLC), media access control (MAC), and physical (PHY), and RUs may be implemented to further perform functions for a PHY layer in addition to the radio frequency (RF) functions.

The DU 210 may be responsible for upper layer functions of a wireless network. For example, the DU 210 may perform a function of the MAC layer and a portion of the PHY layer. Here, the portion of the PHY layer, which is performed at a relatively higher level of the functions of the PHY layer, may include, for example, channel encoding (or channel decoding), scrambling (or descrambling), modulation (or demodulation), layer mapping (or layer demapping) and so on. According to an embodiment, when the DU 210 conforms to the O-RAN standard, it may be referred to as an O-RAN DU (O-DU). The DU 210 may be represented to be replaced with a first network entity for a base station (e.g., gNB) in embodiments of the disclosure, as occasion demands.

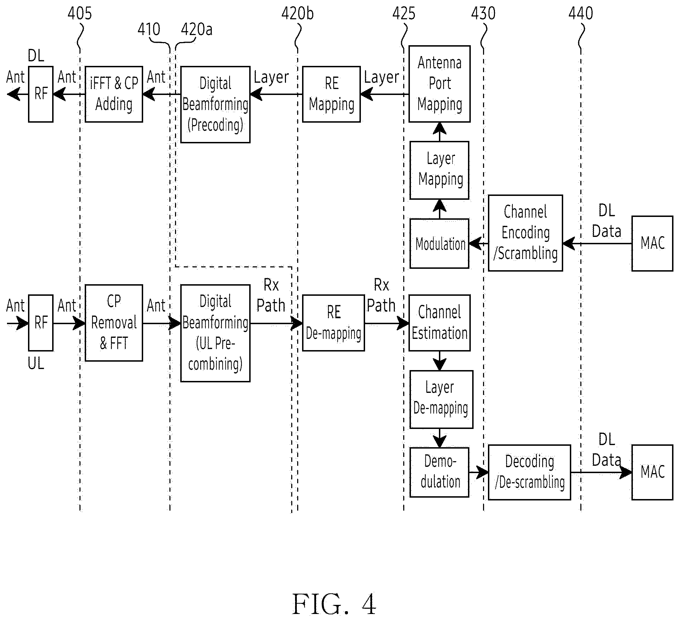

The RU 220 may be responsible for lower layer functions of a wireless network. For example, the RU 220 may perform a portion of the PHY layer and an RF function. Here, the portion of the PHY layer, which is performed at a relatively lower level than the DU 210 of the functions of the PHY layer, may include, for example, inverse fast forward transform (iFFT) (or fast forward transform (FFT)), cyclic prefix (CP) insertion (or CP removal), and digital beamforming. An example of such a specific function split will be described in greater detail with reference to FIG. 4. The RU 220 may be referred to as 'access unit (AU), 'access point (AP), 'transmission/reception point (TRP), 'remote radio head (RRH), 'radio unit (RU)' or other terms having a technical meaning equivalent thereto. According to an embodiment, the RU 220 may be referred to as an O-RAN RU (O-RU) when it complies with the O-RAN standard. The RU 220 may be represented replaced with a second network entity for a base station (e.g., gNB) in embodiments of the disclosure as needed.

While FIG. 2A describes that the base station 110 includes the DU 210 and the RU 220, embodiments of the disclosure are not limited thereto. The base station according to embodiments may be implemented in a distributed deployment based on a centralized unit (CU) configured to perform functions of higher layers of an excess network (e.g., packet data convergence protocol (PDCP), radio resource control (RRC)), and a distributed unit (DU) configured to perform functions of lower layers. In such a case, the distributed unit (DU) may include a digital unit (DU) and a radio unit (RU) of FIG. 1. Between a core (e.g., 5G core (5GC) or next generation core (NGC) network and a radio access network (RAN), the base station may be implemented in a structure in which CU, DU, and RU are arranged in order. The interface between the CU and the distributed unit (DU) may be referred to as an F1 interface.

A centralized unit (CU) may be connected to one or more DUs to be responsible for the functions of a higher layer than the DU. For example, the CU may be responsible for the functions of a radio resource control (RRC) and a packet data convergence protocol (PDCP) layer, and the DU and the RU may be responsible for the functions of a lower layer. The DU may perform some functions (e.g., high PHY) of radio link control (RLC), a media access control (MAC), and physical (PHY) layers, and the RU may be responsible for the remaining functions (e.g., low PHY) of the PHY layer. Further, for example, the digital unit (DU) may be included in the distributed unit (DU) according to implementation of a distributed deployment of the base station. Hereinafter, operations of the digital unit (DU) and the RU are described, unless otherwise defined, but various embodiments of the disclosure may be applied to any one of a base station deployment including the CU or a deployment in which the DU is directly connected to a core network (i.e., the CU and the DU are implemented integrated into one entity of base station (e.g., NG-RAN node).

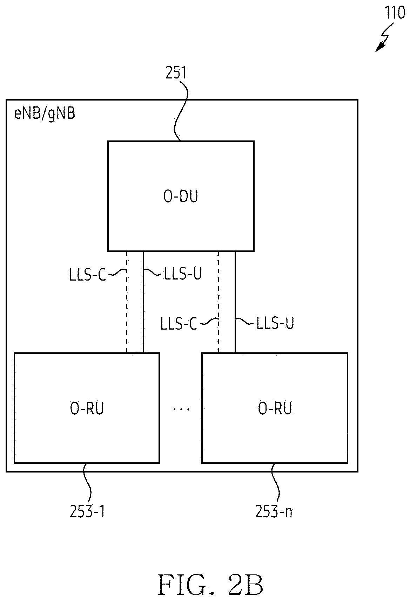

FIG. 2B illustrates a fronthaul interface of an open-radio access network (O-RAN) according to embodiments. Either eNB or gNB is illustrated as a base station 110 in a distributed deployment.

Referring to FIG. 2B, the base station 110 may include an O-DU 251 and O-RUs 253-1, ... , 253-n. Hereinafter, for convenience of description, the operation and function of the O-RU 253-1 may be understood as a description of each of other O-RUs (e.g., O-RU 253-n).

The DU 251 is a logical node including functions except for the functions exclusively allocated to the O-RU 253-1 among the functions of the base station (e.g., eNB, gNB) according to FIG. 4 to be described below. The O-DU 251 may control the operation of the O-RUs 253-1, ..., 253-n. The O-DU 251 may be referred to as a lower layer split (LLS) central unit (CU). The O-RU 253-1 is a logical node including a subset of the functions of the base station (e.g., eNB, gNB) according to FIG. 4 to be described below. Real-time aspects of control plane communication and user plane communication with the O-RU 253-1 may be controlled by the O-DU 251.

The DU 251 may perform communication with the O-RU 253-1 via an LLS interface. The LLS interface corresponds to a fronthaul interface. The LLS interface refers to a logical interface between the O-DU 251 and the O-RU 253-1 using a lower layer functional split (i.e., intra-PHY-based functional split). An LLS-C between the O-DU 251 and the O-RU 253-1 provides a C-plane through the LLS interface. An LLS-U between the O-DU 251 and the O-RU 253-1 provides a U-plane through the LLS interface.

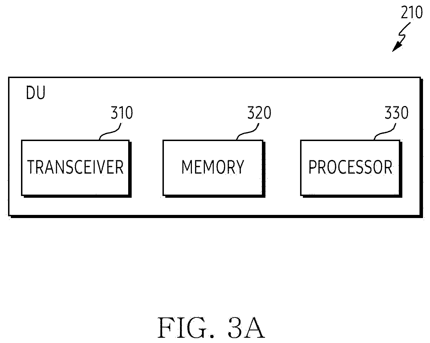

In FIG. 2B, the entities of the base station 110 have been described as O-DU and O-RU in order to describe the O-RAN. However, this designations is not to be construed as limiting the embodiments of the disclosure. In the embodiments described with reference to FIGS. 3A to 9B, it will be apparent that operations of the DU 210 may be performed by the O-DU 251. The description of the DU 210 may be applied to the O-DU 251. Likewise, in the embodiments described with reference to FIGS. 3A to 9B, it will be apparent that operations of the RU 220 may be performed by the O-RU 253-1. The description of the RU 220 may be applied to the O-DU 253-1.

FIG. 3A illustrates a functional configuration of a distributed unit (DU) according to embodiments. The configuration illustrated in FIG. 3A may be understood as a configuration of the DU 210 of FIG. 2A (or the O-DU 250 of FIG. 2B), which is a part of the base station. Hereinafter, as used herein, the terms '~ unit', '~er/~or', and so on refer to units that process at least one function or operation, which may be implemented by either hardware or software, or a combination of hardware and software.

Referring to FIG. 3A, a DU 210 includes a transceiver 310, a memory 320, and a processor 330.

The transceiver 310 may perform functions for transmitting and receiving signals in a wired communication environment. The transceiver 310 may include a wired interface for controlling a direct connection between a device and another device through a transmission medium (e.g., a copper wire, an optical fiber). For example, the transceiver 310 may transmit an electrical signal to another device through a copper wire or perform conversion between an electrical signal and an optical signal. The DU 210 may communicate with a radio unit (RU) through the transceiver 310. The DU 210 may be connected to a core network or a CU in a distributed deployment via the transceiver 310.

The transceiver 310 may also perform functions for transmitting and receiving signals in a wireless communication environment. For example, the transceiver 310 may perform a conversion function between a baseband signal and a bit stream according to a physical layer standard of the system. For example, upon transmitting data, the transceiver 310 generates complex symbols by encoding and modulating a transmission bit stream. Further, upon receiving data, the transceiver 310 restores a reception bit stream by demodulating and decoding the baseband signal. Further, the transceiver 310 may include a plurality of transmission/reception paths. Furthermore, according to an embodiment, the transceiver 310 may be connected to a core network or to other nodes (e.g., integrated access backhaul (IAB).

The transceiver 310 may transmit and receive signals. For example, the transceiver 310 may transmit a management plane (M-plane) message. For example, the transceiver 310 may transmit a synchronization plane (S-plane) message. For example, the transceiver 310 may transmit a control plane (C-plane) message. For example, the transceiver 310 may transmit a user plane (U-plane) message. For example, the transceiver 310 may receive a user plane message. Although only the transceiver 310 is illustrated in FIG. 3A, the DU 210 may include two or more transceivers according to another embodiment.

The transceiver 310 transmits and receives signals as described above. Accordingly, all or part of the transceiver 310 may be referred to as a 'communication unit', a 'transmission unit', a 'reception unit', or a 'transmission/reception unit'. Further, in the following description, transmission and reception performed via a wireless channel are used as a meaning including the processing performed by the transceiver 310 as described above.

Although not shown in FIG. 3A, the transceiver 310 may further include a backhaul transceiver to be connected to a core network or another base station. The backhaul transceiver provides an interface for performing communication with other nodes in a network. That is, the backhaul transceiver may convert a bit stream transmitted from the base station to another node, for example, another access node, another base station, an upper node, a core network, or the like, into a physical signal, and may convert a physical signal received from the other node into a bit stream.

The memory 320 stores data such as e.g., a basic program, an application program, setting information, and so on for the operation of the DU 210. The memory 320 may be referred to as a storage unit. The memory 320 may include a volatile memory, a non-volatile memory, or a combination of the volatile memory and the non-volatile memory. Further, the memory 320 provides the stored data according to a request of the processor 330.

The processor 330 may control the overall operations of the DU 210. The processor 380 may be referred to as a controller. For example, the processor 330 transmits and receives signals through the transceiver 310 (or through a backhaul communication unit). Further, the processor 330 records and reads data in/from the memory 320. Further, the processor 330 may perform functions of a protocol stack required by a communication standard. Although only the processor 330 is illustrated in FIG. 3A, the DU 210 may include two or more processors according to other implementations.

The configuration of the DU 210 shown in FIG. 3A is only of an example, and the example of the DU performing embodiments of the disclosure is not limited to the configuration shown in FIG. 3A. In some embodiments, some of the configurations may be added, deleted, or modified.

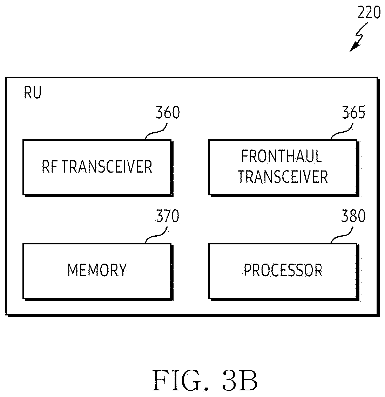

FIG. 3B illustrates a functional configuration of a radio unit (RU) according to embodiments. The configuration illustrated in FIG. 3B may be understood as a configuration of the RU 220 of FIG. 2B or the O-RU 253-1 of FIG. 2B as a part of the base station. Hereinafter, the terms '~ unit', '~er/~or', etc. refer to units that process at least one function or operation, which may be implemented by hardware or software, or a combination of hardware and software.

Referring to FIG. 3B, the RU 220 includes an RF transceiver 360, a fronthaul transceiver 365, a memory 370, and a processor 380.

The RF transceiver 360 performs functions for transmitting and receiving signals via a wireless channel. For example, the RF transceiver 360 may up-convert a baseband signal to an RF band signal to then transmit the same through an antenna, and down-convert the RF band signal received through the antenna to a baseband signal. For example, the RF transceiver 360 may include a transmission filter, a reception filter, an amplifier, a mixer, an oscillator, a DAC, an ADC, and the like.

The RF transceiver 360 may include a plurality of transmission/reception paths. Furthermore, the RF transceiver 360 may include an antenna unit. The RF transceiver 360 may include at least one antenna array including a plurality of antenna elements. In terms of hardware, the RF transceiver 360 may include digital circuitry and analog circuitry (e.g., a radio frequency integrated circuit (RFIC). Here, the digital circuitry and the analog circuitry may be implemented as a single package. In addition, the RF transceiver 360 may include a plurality of RF chains. The RF transceiver 360 may perform beamforming. The RF transceiver 360 may apply a beamforming weight to a signal to be transmitted/received in order to render a directivity according to the setting of the processor 380 to the signal. According to an embodiment, the RF transceiver 360 may include a radio frequency block (or RF unit).

According to an embodiment, the RF transceiver 360 may transmit and receive signals over a radio access network. For example, the RF transceiver 360 may transmit a downlink signal. The downlink signal may include a synchronization signal (SS), a reference signal (RS) (e.g., cell-specific reference signal (CRS), demodulation (DM)-RS), system information (e.g., MIB, SIB, remaining system information (RMSI), other system information (OSI)), a configuration message, control information, downlink data, and so on. For example, the RF transceiver 360 may receive an uplink signal. The uplink signal may include a random access-related signal (e.g., random access preamble (RAP) (or Msg1 (message 1), Msg3 (message 3)), a reference signal (e.g., sounding reference signal (SRS), DM-RS), or a power headroom report (PHR) and so on. Although only the RF transceiver 360 is illustrated in FIG. 3B, the RU 220 may include two or more RF transceivers according to another example of implementation.

The fronthaul transceiver 365 may transmit and receive signals. According to an embodiment, the fronthaul transceiver 365 may transmit and receive signals on a fronthaul interface. For example, the fronthaul transceiver 365 may receive a management plane (M-plane) message. For example, the fronthaul transceiver 365 may receive a synchronization plane (S-plane) message. For example, the fronthaul transceiver 365 may receive a control plane (C-plane) message. For example, the fronthaul transceiver 365 may transmit a user plane (U-plane) message. For example, the fronthaul transceiver 365 may receive the user plane message. Although only the fronthaul transceiver 365 is illustrated in FIG. 3B, the RU 220 may include two or more fronthaul transceivers according to another example of implementation.

The RF transceiver 360 and the fronthaul transceiver 365 transmit and receive signals as described above. Accordingly, all or part of the RF transceiver 360 and the fronthaul transceiver 365 may be referred to as 'communication unit', 'transmission unit', 'reception unit', or 'transmission/reception unit'. Further, in the following description, the transmission and reception performed through a wireless channel may be used as a meaning including the processing performed as described above by the RF transceiver 360. In the following description, the transmission and reception performed through a wireless channel may be used as a meaning including the processing performed as described above by the RF transceiver 360.

The memory 370 stores data such as a basic program, an application program, and setting information for the operation of the RU 220. The memory 370 may be referred to as a storage unit. The memory 370 may include a volatile memory, a non-volatile memory, or a combination of the volatile memory and the non-volatile memory. Further, the memory 370 provides the stored data according to a request from the processor 380. According to an embodiment, the memory 370 may include a memory for conditions, instructions, or setting values related to an SRS transmission scheme.

The processor 380 controls the overall operations of the RU 220. The processor 380 may be referred to as a controller. For example, the processor 380 transmits and receives signals through the RF transceiver 360 or the fronthaul transceiver 365. Further, the processor 380 records and reads data in/from the memory 370. In addition, the processor 380 may perform the functions of the protocol stack required by the communication standard. Although only the processor 380 is illustrated in FIG. 3B, the RU 220 may include two or more processors according to another example of implementation. The processor 380 may be a storage for storing therein an instruction or code at least temporarily resided in the processor 380, as an instruction set or code stored in the memory 370, or may be part of circuitry configuring the processor 380. Further, the processor 380 may include various modules for performing communication. The processor 380 may control the RU 220 to perform operations according to embodiments to be described below.

The configuration of the RU 220 shown in FIG. 3B is only of an example, and the example of the RU performing embodiments of the disclosure from the configuration shown in FIG. 3B is not limited thereto. In some embodiments, some of the configurations may be added, deleted, or changed.

FIG. 4 illustrates an example of a function split between a DU and an RU according to embodiments. As the wireless communication technology further evolves (such as e.g., the introduction of 5G communication systems (or new radio (NR) communication systems)), the frequency band in use has further increased. As the cell radius of a base station becomes very small, the number of RUs required to be installed has further increased. In addition, in the 5G communication system, the amount of data transmitted has greatly increased by a factor of 10 or more, significantly increasing the transfer capacity of a wired network transmitted to the fronthaul. Due to the aforementioned factors, the installation cost of the wired network in the 5G communication system may be greatly increased. Therefore, in order to reduce the transfer capacity of the wired network as well as reduce the installation cost of the wired network, such a "function split' may be used to reduce the transfer capacity of the fronthaul by transferring some of the functions of a modem in the DU to the RU.

In order to reduce the burden on the DU, the role of the RU, which is responsible for only the conventional RF functions, may be extended to some functions of the physical layer. As the RU performs the functions of the higher layer, the throughput of the RU increases, so that the transmission bandwidth in the fronthaul may increase, while lowering the constraint on delay time requirement due to response processing. Meanwhile, as the RU performs the functions of the higher layer, the virtualization gain decreases and the size, weight, and cost of the RU may increase. In consideration of the trade-off of the aforementioned advantages and disadvantages, it is required to implement the optimal functional split.

Referring to FIG. 4, function splits in a physical layer below the MAC layer are illustrated. In the case of downlink (DL) transmitting a signal to a terminal over a wireless network, a base station may sequentially perform channel encoding/scrambling, modulation, layer mapping, antenna mapping, RE mapping, digital beamforming (e.g., precoding), iFFT conversion/CP inserting, RF conversion and so on. In the case of uplink (UL) receiving a signal from the terminal over a wireless network, the base station may sequentially perform RF conversion, FFT conversion/CP removal, digital beamforming (e.g., pre-combining), RE demapping, channel estimation, layer demapping, demodulation, decoding/descrambling and so on. The separation of uplink functions and downlink functions may be defined in various types by a necessity between vendors, discussion on the specification, and the like according to the trade-off described above.

In a first function split 405, an RU performs an RF function, and a DU performs a PHY function. The first function split, in which the PHY function in the RU is not substantially implemented, may be referred to, for example, as Option 8. In a second function split 410, the RU performs iFFT conversion/CP inserting in the DL of the PHY function and FFT conversion/CP removal in UL, and the DU performs the remaining PHY functions. For example, the second function split 410 may be referred to as Option 7-1. In a third function split 420a, the RU performs iFFT conversion/CP inserting in the DL of the PHY function and FFT conversion/CP removal and digital beamforming in the UL, and the DU performs the remaining PHY functions. For example, the third function split 420a may be referred to as Option 7-2x Category A. In a fourth function split 420b, the RU performs up to digital beamforming in both DL and UL, and the DU performs upper PHY functions after the digital beamforming. For example, the fourth function split 420b may be referred to as Option 7-2x Category B. In a fifth function split 425, the RU performs up to RE mapping (or RE demapping) in both DL and UL, and the DU performs upper PHY functions after the RE mapping (or RE demapping). For example, the fifth function split 425 may be referred to as Option 7-2. In a sixth function split 430, the RU performs up to modulation (or demodulation) in both DL and UL, and the DU performs higher PHY functions after up to the modulation (or demodulation). For example, the sixth function split 430 may be referred to as Option 7-3. In a seventh function split 440, the RU performs up to encoding/scrambling (or decoding/descrambling) in both DL and UL, and the DU performs higher PHY functions after up to modulation (or demodulation). As an example, the seventh function split 440 may be referred to as Option 6.

According to an embodiment, when a large amount of signal processing is expected, such as FR 1 MMU, the function split at a relatively high layer (e.g., the fourth function split 420b) may be required to reduce the fronthaul capacity. Furthermore, the function split at a too high layer (e.g., the sixth function split 430) may complicate the control interface and include a number of PHY processing blocks within the RU, which may cause a significant burden on implementation of the RU, and thus an appropriate function split may be required depending upon the deployment and implementation scheme of the DU and RU.

According to an embodiment, when it is not possible to process precoding of data received from the DU (i.e., when there is a limit to the precoding capability of the RU), the third function split 420a or its lower level of function split (e.g., the second function split 410) may be applied. Conversely, when there is a capability to process precoding of data received from the DU, the fourth function split 420b or its higher level of function split (e.g., the sixth function split 430) may be applied.

Hereinafter, embodiments of the disclosure are described on the basis of the third function split 420a (which may be referred to as 'category A, CAT-A') or the fourth function split 420b (which may be referred to as 'category B, CAT-B') for performing beamforming in the RU, unless otherwise specified. In the O-RAN standard, the type of O-RU is distinguished depending on whether the precoding function is located at an interface of the O-DU or located at an interface of the O-RU. The O-RU in which precoding is not performed (i.e., with low complexity) may be referred to as a CAT-A O-RU. The O-RU in which the precoding is performed may be referred to as a CAT-B O-RU.

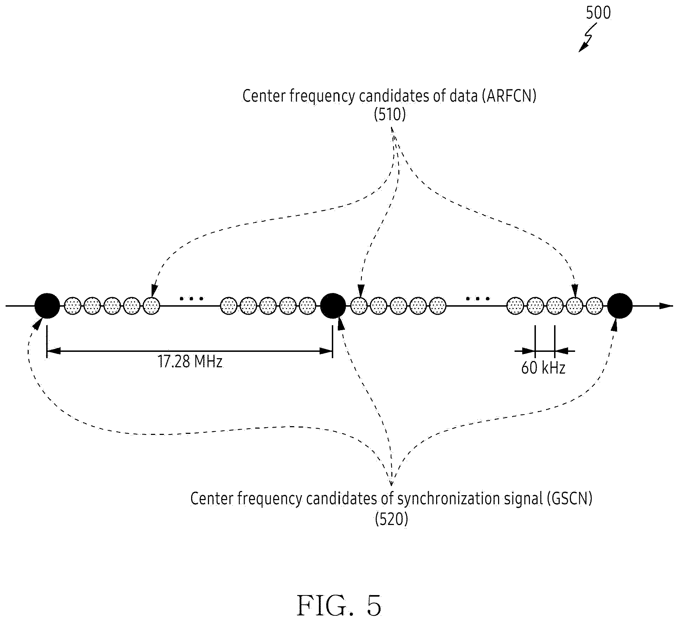

Hereinafter, an upper-PHY refers to physical layer processing processed in a DU of a fronthaul interface. For example, the upper-PHY may include FEC encoding/decoding, scrambling, and modulation/demodulation. Hereinafter, a lower-PHY refers to physical layer processing processed in an RU of the fronthaul interface. For example, the lower-PHY may include FFT/iFFT, digital beamforming, and physical random access channel (PRACH) extraction and filtering. However, the aforementioned criteria is not intended to exclude embodiments through other function splits. Functional configuration, signaling, or operations of FIGS. 5 to 10 to be described below may be applied not only to the third function split 420a or the fourth function split 420b but also to other function splits.

Embodiments of the disclosure describe an example of the specification of eCPRI and O-RAN as the fronthaul interface, when transmitting a message between a DU (e.g., the DU 210 of FIG. 2A) and an RU (e.g., the RU 220 of FIG. 2A). An Ethernet payload of the message may include an eCPRI header, an O-RAN header, and additional fields. Hereinafter, various embodiments of the disclosure are described using the standard terms of eCPRI or O-RAN, but other expressions having the same meaning as the respective terms may be used in place of various embodiments of the disclosure.

As a transport protocol of the fronthaul, Ethernet and eCPRI that are easy to share with the network may be used. The eCPRI header and the O-RAN header may be included in the Ethernet payload. The eCPRI header may be located ahead of the Ethernet payload. The contents of the eCPRI header are as follows.

1) ecpriVersion (4 bits): This parameter indicates an eCPRI protocol version.

2) ecpriReserved (3 bits): This parameter is reserved for further use of eCPRI.

3) ecpriConcatenation (1 bit): This parameter indicates when eCPRI concatenation is in use.

4) ecpriMessage (1 byte): This parameter indicates a type of service carried by a message type. For example, the parameter indicates an IQ data message, a real-time control data message, or a transmission network delay measurement message.

5) ecpriPayload (2 bytes): This parameter indicates a byte size of a payload portion of an eCPRI message.

6) ecpriRtcid/ecpriPcid (2 bytes): This parameter is an eAxC (extended Antenna-carrier) identifier (eAxC ID) and identifies a specific data flow associated with each C-plane (ecpriRtcid) or U-plane (ecpriPcid) message.

7) ecpriSeqid (2 bytes): This parameter provides unique message identification and order at two levels. The first octet of this parameter is a sequence ID used to identify the order of messages within an eAxC message stream, and the sequence ID is used to identify that all messages have been received and to realign the messages that are out of order. The second octet of this parameter is a sub-sequence ID. The sub-sequence ID is used to identify the order and implement the rearrangement when radio-transport-level fragmentation (eCPRI or IEEE-1914.3) occurs.

The eAxC identifier (ID) includes a band and sector identifier ('BandSector_ID', a component carrier identifier ('CC_ID', a spatial stream identifier ('RU_Port_ID') and a distributed unit identifier ('DU_Port_ID'. Bit allocation of the eAxC ID may be classified as follows.

1) DU_port ID: The DU_port ID is used to distinguish processing units in the O-DU (e.g., other baseband cards). It is expected that the O-DU allocates bits for the DU_port ID, and the O-RU attaches the same value to the UL U-Plan message carrying the same sectionId data.

2) BandSector_ID: Aggregated cell identifier (separating the band and the sector supported by the O-RU).

3) CC_ID: CC_ID distinguishes the carrier components supported by the O-RU.

4) RU_port ID: RU_port ID designates logical flows such as data layers or spatial streams, and logical flows such as signal channels requiring a special antenna allocation such as separate numerologies (e.g., PRACH) or SRS.

The application protocol of the fronthaul may include a control plane (C-plane), a user plane (U-plane), a synchronization plane (S-plane), and a management plane (M-plane).

The control plane may be configured to provide scheduling information and beamforming information through a control message. The control plane means real-time control between the DU and the RU. The user plane may include IQ sample data transmitted between the DU and the RU. The user plane may include a user's downlink data (IQ data or synchronization signal block (SSB)/reference signal (RS)), uplink data (IQ data or SRS/RS), or physical random access channel (PRACH) data. A weight vector of the aforementioned beamforming information may be multiplied by user data. The synchronization plane generally means traffic between the DU and the RU for a synchronization controller (e.g., an IEEE grand master). The synchronization plane may be related to timing and synchronization. The management plane means non-real time control between the DU and the RU. The management plane may be related to initial setup, non-real time reset, or reset, and non-real time report.

The message of the control plane, i.e., the C-plane message, may be encapsulated based on a two-layer header approach scheme. The first layer may be composed of an eCPRI common header or an IEEE 1914.3 common header including fields used to indicate the message type. The second layer is an application layer including fields necessary for control and synchronization. In the application layer, a section defines the characteristics of U-plane data transmitted or received in a beam having one pattern ID. The section types supported in the C-plane are as follows.

The Section Type may indicate the use of a control message transmitted in the control plane. For example, the use of each Section Type is as follows.

1) sectionType=0: used to indicate resource blocks or symbols not used in DL or UL.

2) sectionType=1: used for most DL/UL wireless channels. Here, the term "most" refers to channels that do not require time or frequency offsets, as required for mixed numerology channels.

3) sectionType=2: reserved for further use.

4) sectionType=3: PRACH and mixed numerology channel, which requires time or frequency offset or is different from a nominal SCS value(s).

5) sectionType=4: Reserved for further use.

6) sectionType=5: UE scheduling information, transmitting UE scheduling information to allow the RU to perform a real-time BF weight calculation (O-RAN optional BF scheme).

7) sectionType=6: UE-specific channel information transmission, periodically delivering UE channel information so that the RU can perform a real-time BF weight calculation (O-RAN optional BF scheme).

8) sectionType=7: used for LAA support.

9) sectionType=8: used for ACK/NACK feedback.

In 5G NR, a PRB including the same number of subcarriers per PRB is defined for all numerologies. The PRB may include 12 subcarriers. The numerology refers to subcarrier spacing (SCS) and a symbol length in an orthogonal frequency-division multiplexing (OFDM) system. Since the SCS may be different for each numerology, mixed numerologies may be used in the time domain and the frequency domain, respectively. For example, mixed numerologies may be used for URLLC transmission. Further, for example, when the numerology of data (e.g., physical downlink shared channel (PDSCH)) and the numerology of synchronization signal block (SSB) in FR 2 (or FR 2-1 or FR 2-2) are different, mixed numerologies may be used.

FIG. 5 illustrates a difference in raster units between ARFCN (absolute radio frequency channel number) and GSCN (global synchronization channel number) according to embodiments.

Referring to FIG. 5, a frequency domain 500 may include candidates 510 of a bandwidth center frequency according to a channel raster. Each of the candidates of the bandwidth center frequency may be numbered based on ARFCN. The frequency domain 5300 may include candidates 520 of an SSB center frequency according to a synchronization raster. Each of the candidates of the SSB center frequency may be numbered based on a GSCN.

A global frequency raster defines FREF, which is a set of RF reference frequencies. The RF reference frequency may be used for identifying positions of RF channels, SSBs, and other elements in a signal. The global frequency raster is defined for all frequencies in the range of 0 to 100 GHz. The granularity of the global frequency raster is $\Delta F_{Global}$. The RF reference frequency may be designated based on an NR-absolute radio frequency channel number (NR-ARFCN). For example, the relationship between the NREF corresponding to the NR-ARFCN and the FREF corresponding to the RF reference frequency is shown in the following equation and table.

## \<Equation 1\>

$$F_{REF} = F_{REF\text{-Offs}} + \Delta F_{Global} (N_{REF} - N_{REF\text{-Offs}})$$

**\<Table 1\>**

| Range of frequencies (MHz) | ΔFGloba l (kHz) | FREF-Offs (MHz) | NREF-Offs | Range of NREF |
|---|---|---|---|---|
| 0 - 3000 | 5 | 0 | 0 | 0 - 599999 |
| 3000 - 24250 | 15 | 3000 | 600000 | 600000 - 2016666 |
| 24250 - 100000 | 60 | 24250.08 | 2016667 | 2016667 - 3279165 |

The synchronization raster may indicate frequency positions of the SSB. When there is no explicit signaling of the synchronization block position, it indicates a frequency position of the SSB that may be used by the UE for system acquisition. The global synchronization raster is defined for all frequencies. The frequency position of the SSB is defined as an SSREF together with the corresponding number GSCN. For example, the position of the candidates 520 of the synchronization signal (e.g., SSB) according to a frequency range may be defined as set forth in the following table.

**\<Table 2\>**

| Range of frequencies (MHz) | SS block frequency position SSREF | GSCN | Range of GSCN |
|---|---|---|---|
| 0 - 3000 | N * 1200 kHz + M * 50 kHz,N = 1:2499, M {1,3,5} (Note) | 3N + (M-3)/2 | 2 - 7498 |
| 3000 - 24250 | 3000 MHz + N * 1.44 MHz, N = 0:14756 | 7499 + N | 7499 - 22255 |
| 24250 - 100000 | 24250.08 MHz + N * 17.28 MHz, N = 0:4383 | 22256 + N | 22256 - 26639 |
| NOTE: The default value for operating bands which only support SCS spaced channel raster(s) is M=3. | | | |

A standalone (SA) system is a system that operates the control plane (C-plane) and the user plane (U-plane) in the same RAN node. The center frequency for transmitting SSB corresponding to the C-plane refers to SSREF, but the center frequency of a system bandwidth (or bandwidth part) corresponding to the user plane refers to FREF. As described above, the SSREF is a unit of GSCN, while the FREF is a different unit of ARFCN.

In the frequency band of FR 2, the unit of ARFCN is 60 kHz, while the unit of GSCN is 17.28 MHz, so when the center frequencies between the two channels are different, a frequency offset may occur between the two physical channels. For example, the frequency band of FR 2 may be n257 band (26.50 GHz to 29.50 GHz), n258 band (24.25 GHz to 27.50 GHz), n260 band (37.00 GHz to 40.00 GHz), or n261 band (27.25 GHz to 28.35 GHz). In the frequency band of FR 2, the SSB transmission may use a numerology of 240 kHz. Meanwhile, the maximum SCS for data transmission in the frequency band of FR 2 is 120 kHz. However, the raster difference and the SCS difference described above require more detailed units of frequency offset correction. Frequency compensation values may be expressed by the following equation.

## \<Equation 2\>

$$\delta_{f,ssb} = \frac{(f_{ssb} - f_0)}{\Delta f_{ssb}} - \left\lfloor \frac{(f_{ssb} - f_0)}{\Delta f_{ssb}} \right\rfloor$$

wherein, $\Delta f_{ssb}$ denotes SCS of SSB, $f_{ssb}$ denotes SSREF of SSB, and $f_0$ denotes FREF, which is a center frequency of channel bandwidth. For example, in n257 band, the frequency offset per GSCN according to search of the SSB having the SCS of 240 kHz may be expressed as follows.

**\<Table 3\>**

| n257 |
|---|

(continued)

| | | | |
|---|---|---|---|
| GSCN offset | 22256 | | |
| GSCN start | 22390 | | |
| GSCN step | 2 | | |
| SSREF offset (kHz) | 24250080 | | |
| SSREF step (kHz) | 17280 | | |
| GSCN | N | SSREF (kHz) | $\delta_{f,ssb}$ |
| 22390 | 134 | 26565 600 | 0 |
| 22392 | 136 | 26600 160 | 0.75 |
| 22394 | 138 | 26634 720 | 0.5 |
| 22396 | 140 | 26669 280 | 0.25 |
| 22398 | 142 | 26703 | 0 |
| | | 840 | |
| 22400 | 144 | 26738 400 | 0.75 |
| 22402 | 146 | 26772 960 | 0.5 |
| 22404 | 148 | 26807 520 | 0.25 |
| 22406 | 150 | 26842 080 | 0 |

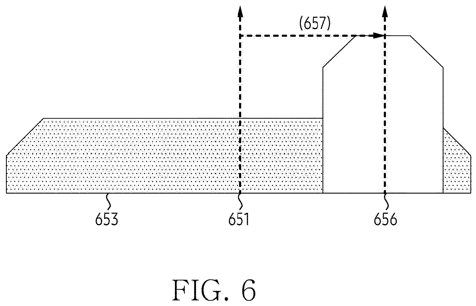

FIG. 6 illustrates an example of offset compensation of a synchronization signal block (SSB) having a center frequency that is different from a center frequency of a system bandwidth according to embodiments.

Referring to FIG. 6, a model is assumed in which the center frequency of a system bandwidth 653 (hereinafter, referred to a bandwidth center frequency 651) and the center frequency of SSB (hereinafter, referred to as an SSB center frequency 655) are different. The bandwidth center frequency 651 is $f_0$, and the SSB center frequency 655 is $f_{ssb}$. The difference 657 between the two center frequencies is $f_d$ (frequency discrepancy) (=$f_{sb}$-$f_0$).

The difference 'fd' may include a multiple part and a fractional part, on the basis of SCS($\Delta f_{ssb}$) of the SSB. The multiple part refers to a part that is an integer multiple of the SCS of the SSB in the center frequency difference. The fractional part may be a part of the SCS of the SSB in the center frequency difference. That is, the fractional part may be a product of the SCS of the SSB and a fraction less than 1 (or a fraction having a magnitude of less than 1). The multiple part may be represented by ($k_{ssp}\Delta f_{ssb}$), and the fractional part may be represented by $\delta$ ($0 \leq \delta < \Delta f_{ssb}$ or $-\Delta f_{ssb} < \delta < \Delta f_{ssb}$). $k_{ssb}$ may be defined as a resource element (RE) offset having a unit of $\Delta f_{ssb}$. According to the 3GPP standard (e.g., section 5.4 of 3GPP TS 38.211), the bandwidth center frequency 651 is used in the uplink conversion of the SSB, and thus the time domain of the SSB may be developed by the following equation.

**<Equation 3>**

$$s_{ssb}(t) = e^{j2\pi f_0 t} \sum_{m=0}^{\infty} s_{ssb,m}(t) \underbrace{e^{j2\pi f_d\left(t-\left(N_{cp_{ssb},m}+\sum_{l=0}^{m-1}\left(N_{cp_{ssb},l}+N_{ifft_{ssb}}\right)\right)T_{s_{ssb}}\right)}}_{\text{frequency shift component wi. zero phase every symbol}} \underbrace{e^{-j2\pi f_0\left(N_{cp_{ssb},m}+\sum_{l=0}^{m-1}\left(N_{cp_{ssb},l}+N_{ifft_{ssb}}\right)\right)T_{s_{ssb}}}}_{\text{NR phase compensation for } f_0}$$

**<Equation 4>**

$$s_{ssb}(t) = e^{j2\pi f_0 t} \sum_{m=0}^{\infty} s_{ssb,m}(t) e^{j2\pi(k_{ssb}\Delta f_{ssb}+\delta)\left(t-\left(N_{cp_{ssb},m}+\sum_{l=0}^{m-1}\left(N_{cp_{ssb},l}+N_{ifft_{ssb}}\right)\right)T_{s_{ssb}}\right)} e^{-j2\pi f_0\left(N_{cp_{ssb},m}+\sum_{l=0}^{m-1}\left(N_{cp_{ssb},l}+N_{ifft_{ssb}}\right)\right)T_{s_{ssb}}}$$

**\<Equation 5\>**

$$s_{ssb}(t)$$
$$= e^{j2\pi f_0 t}\underbrace{e^{j2\pi\delta t}}_{\substack{frequency\ shift\\ component}}\sum_{m=0}^{\infty}s'_{ssb,m}(t)e^{-j2\pi\delta\left(N_{cp_{ssb},m}+\Sigma_{l=0}^{m-1}\left(N_{cp_{ssb},l}+N_{ifft_{ssb}}\right)\right)T_{s_{ssb}}}e^{-j2\pi f_0\left(N_{cp_{ssb},m}+\Sigma_{l=0}^{m-1}\left(N_{cp_{ssb},l}+N_{ifft_{ssb}}\right)\right)T_{s_{ssb}}}$$

Here, $s_{ssb,m}(t)$ denotes an SSB signal converted from the frequency domain to the time domain. $N_{CP_{ssb},l}$ denotes a cyclic prefix (CP) length of an I-th symbol. $N_{ifft}$ denotes an inverse Fast Forward Transform (IFFT) size. $T_{s_{ssb}}$ denotes a sampling rate (unit: second). $s'_{ssb,m}(t)$ denotes an SSB signal of the time domain that is frequency-shifted by the RE offset $k_{ssb}\Delta f_{ssb}$. That is,

$$s'_{SSb,m}(t) = s_{ssb,m}(t)e^{j2\pi k_{ssb}\Delta f_{ssb}\left(t-\left(N_{cp_{ssb},m}+\Sigma_{l=0}^{m-1}\left(N_{cp_{ssb},l}+N_{ifft_{ssb}}\right)\right)T_{s_{ssb}}\right)}$$

Referring to Equation 5, as represented in the component ($e^{j2\pi f_0 t}$) of the system bandwidth and the frequency transition component ($e^{j2\pi\delta t}$), the frequency is shifted by the correction value ($\delta$) with respect to the center frequency ($f_0$) of the system bandwidth. The frequency transition component ($e^{j2\pi\delta t}$) identified from the frequency offset may also be corrected in the time domain. According to the function split of the O-RAN (e.g., the third function split 420a or the fourth function split 420b), the correction in the time domain may be performed in the RU.
For correction in the RU, the O-RAN standard provides a freqOffset field in a section type '3' and a section extension type '15'. The DU may provide a frequency offset value to the RU through a C-plane message. Here, the freqOffset field may be defined as follows.

**\<Equation 6\>**

$$\texttt{frequency\_offset = freqOffset * } \Delta\texttt{f * 0.5}$$

Here, '$\Delta f$' refers to SCS provided in a frame structure. 'freqOffset' is a value of the freqOffset field of the C-plane message. The value of the freqOffset field of the C-plane message represents the frequency offset value as the number of counting units, by considering a part of the SCS as a counting unit. Hereinafter, a ratio indicating a part of the SCS may be referred to as a frequency offset factor (or fractional frequency offset). As an example, in the Equation 6, the frequency offset factor is 0.5. The product of the frequency offset factor and the SCS may be referred to in units of offsets. For example, for an SSB having an SCS of 240 kHz, the DU may recognize an offset unit of 120 kHz to the RU. However, since ARFCN is a unit of 60 kHz, it is difficult for an offset unit of 120 kHz to indicate a sufficient frequency offset. For example, reviewing the Table 3 above, the size of $\delta_{f,ssb}$ is formed in 0.25 unit by the separation of GSCN and ARFCN and the difference in resolution between SSREF and FREF.
In FR 2 (or FR 2-1), the channel raster of ARFCN is 60 kHz, but since the numerology of SCS is 240 kHz, a frequency compensation in units of 60/240 = (1/4) is required. Furthermore, considering the FR 2-2 frequency band introduced in the Release 17, in the frequency band supporting SCS of 480 kHz and SCS of 960 kHz, the frequency compensation requires more detailed offset units (e.g., 0.25, 0.125) than '0.5' of the Equation 6.
In embodiments of the disclosure, proposed is a method for providing all possible frequency compensation values to the RU through the O-RAN standard by analyzing an occurrence range of the frequency compensation value. In particular, in the FR2 SA (stand-alone) system, when the center frequencies are different between the SSB and the system bandwidth, the frequency offset compensation that requires more detailed units of supporting will be described as an example situation.

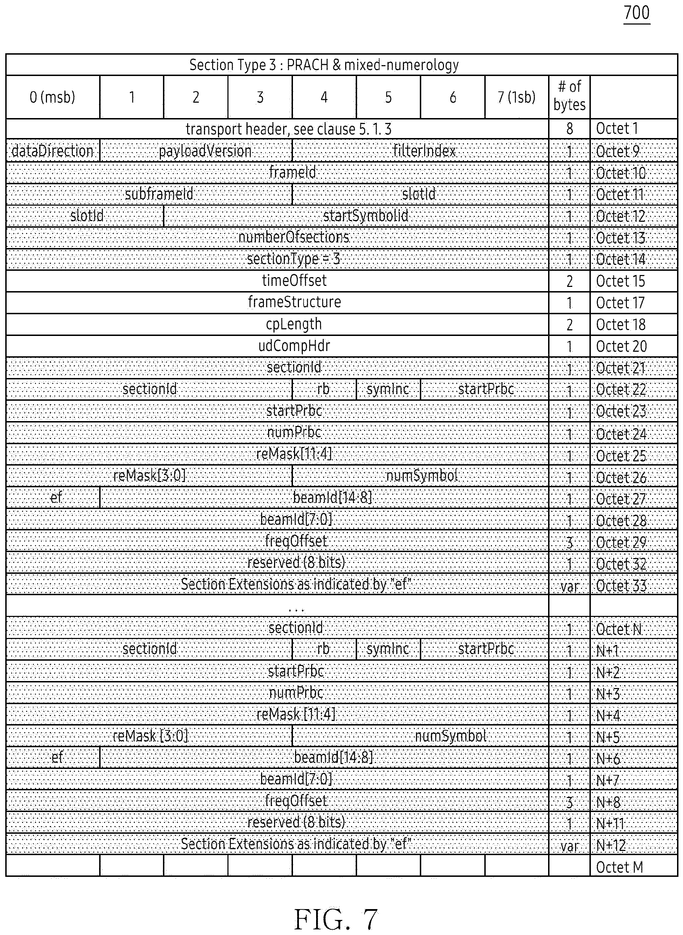

FIG. 7 illustrates an example 700 of a control plane (C-plane) message according to embodiments. In FIG. 7, 'sectionType=3' for mixed numerology channels is illustrated. However, the section type indicating '3' is only of an example, and another section type may be used to provide a frequency offset (e.g., 'freqOffset' in the ORAN standard).
Referring to FIG. 7, the C-plane message may include a transport header (e.g., eCPRI header or IEEE 1914.3 information). The transport header may include 'ecpriVersion', 'ecpriReserved', 'ecpriConcatenation', 'ecpriMessage', 'ecpriPayload', 'ecpriRtcid/ecpriPcid', and 'ecpriSeqid' as described above.
The C-plane message may include common header information. The common header information may include 'dataDirection' indicating a data transmission direction of the base station (e.g., gNB), 'payloadVersion' indicating a valid payload protocol version of IEs in the application layer, and 'filterindex' indicating an index for a channel filter between IQ data and an air interface, to be used in both DL and UL.

The common header information may include information for indicating a location of a time resource to which a message is applicable. The location of the time resource may be indicated by a frame, a subframe, a slot, or a symbol. The common header information may include 'frameId' indicating a frame number, 'subframeId' indicating a subframe number, 'slotId' indicating a slot number, and 'startSymbolId' indicating a symbol number. The frame is determined based on 256 modulo operation. The subframe consists of units of 1 ms unit included in a frame of 10 ms. The slot number is numbered within the subframe, and its maximum size may be 1, 2, 4, 8, or 16 depending upon numerology.

The common header information may include 'numberOfsections' indicating the number of data sections included in the C-plane message. The common header information may include 'sectionType' determining the characteristics of U-plane data. The common header information may include 'timeoffset' defining an offset from the start of a slot to the start of a cyclic prefix (CP), with the number of samples (e.g., Ts= 1/30.72 MHz (megahertz)). The common header information may include 'frameStructure' defining a fast Fourier transform (FFT)/iFFT (inverse FFT) size and an SCS. The common header information may include a 'cpLength' defining a CP length, with the number of samples (e.g., Ts= 1/30.72 MHz (megahertz)).

'frameStructure' included in the common header information defines a frame structure. 'frameStructure' may indicate the FFT/iFFT size and the SCS. For example, for the frame structure, the following table may be referred to.

<Table 4>

| 0(msb) | 1 | 2 | 3 | 4 | 5 | 6 | 7(lsb) | Number of Octects | |
|---|---|---|---|---|---|---|---|---|---|
| FFT Size | | | | μ (Subcarrier spacing) | | | | 1 | Octet 1 |

The first part of 'frameStructure' (e.g., the most significant bit (MSB) 4-bit) may indicate an 'FFT Size' parameter. The 'FFT Size' parameter defines the FFT/iFFT size used for processing all IQ data related to the C-plane message. The second part (e.g., the least significant bit (LSB) 4-bit) of 'frameStructure' may indicate an 'μ' parameter. The 'μ' parameter defines the number of slots per 1 ms (milliseconds) subframe and the SCS, considering the LTE standard (e.g., TS 36.211) and the NR standard (e.g., TS 38.211). Meanwhile, the 'FFT Size' parameter provided is for facilitating calculation and is not for strictly instructing the RU's time-frequency conversion method.

For the 'FFT Size' parameter, the following table may be referenced.

<Table 5>

| Value of IE "FFT size" | FFT/iFFT size |
|---|---|
| 0000b | Reserved (no FFT/iFFT processing) |
| 0001b...0110b | Reserved |
| 0111b | 128 |
| 1000b | 256 |
| 1001b | 512 |
| 1010b | 1024 |
| 1011b | 2048 |
| 1100b | 4096 |
| 1101b | 1536 |
| 1110, 1111b | Reserved |

For the 'μ' parameter, the following table may be referenced.

<Table 6>

| Value of IE "SCS" | 3GPP "μ" | Subcarrier spacing Δf | Number of slots per 1ms sub-frame: Nslot | Slot length |
|---|---|---|---|---|
| 0000b | 0 | 15 kHz | 1 | 1ms |
| 0001b | 1 | 30 kHz | 2 | 500μs |
| 0010b | 2 | 60 kHz | 4 | 250μs |
| 0011b | 3 | 120 kHz | 8 | 125μs |

(continued)

| Value of IE "SCS" | 3GPP "μ" | Subcarrier spacing Δf | Number of slots per 1ms sub-frame: Nslot | Slot length |
|---|---|---|---|---|
| 0100b | 4 | 240 kHz | 16 | 62.5μs |
| 0101b...10 11b | NA | Reserved | Reserved | Reserved |
| 1100b | NA | 1.25 kHz | 1 | 1ms |
| 1101b | NA | 3.75 kHz (LTE-specific) | 1 | 1ms |
| 1110b | NA | 5 kHz | 1 | 1ms |
| 1111b | NA | 7.5 kHz (LTE-specific) | 1 | 1ms |

In the Table above, 1.25 kHz and 5 kHz may be supported for NR PRACH. 3.75 kHz may be supported for PRACH of the narrowband (Nb)-IoT (Internet of everything). 15 kHz, 7.5 kHz, and 1.25 kHz may be supported for LTE PRACH. 1.25 kHz and 7.5 kHz may be supported for LTE PRACH.

The C-plane message may include section information. The section information may include 'sectionId' indicating a section identifier. When C-plane and U-plane coupling through the 'sectionId' are used, the 'sectionId' identifies an individual data section described by a data section description in the C-plane message. The purpose of 'sectionId' is to map a U-plane data section to a corresponding C-plane message (and a section type) associated with data. The section information may include 'rb' indicating whether all RBs are used (every RB is used) or whether all other RBs (every other RB) are used, 'symInc' denoting a symbol number increment command, 'startPrbc' indicating a start PRB number of a data section description, 'numPrbc' indicating the number of consecutive PRBs for each data section description, 'reMask' defining an RE mask in PRB, 'numSymbol' defining the number of times of physical random access channels (PRACH) repetitions or the number of symbols, to which section control is applied, 'ef' indicating an extended flag, and 'beamId' defining a beam pattern to be applied to U-plane data. The section information may include frequency offset information defining a frequency offset for a carrier center frequency in a specific unit (hereinafter, referred to as an offset unit), that is, 'freqOffset'. The offset unit corresponds to a product of SCS and a fractional value. Here, the fractional value may be referred to as a frequency offset factor. A frequency span due to 'frameStructure', 'freqOffset', 'startPrbc', 'numPrbc', and 'rb' of the C-plane message does not exceed the channel bandwidth configured for eAxC of the M-plane.

The value indicated by the bits of frequency offset information defines the frequency offset for the carrier center frequency before additional filtering (e.g., in the case of PRACH) and FFT processing (in the case of UL), in units of offsets. The frequency offset should be consistent for each data section (the section cannot use reMask to allow different frequency offsets for different REs of PRBs).

In some embodiments, the frequency offset information included in the C-plane message may be used to identify the frequency offset value based on the M-plane message. The M-plane message may indicate a frequency offset factor. The M-plane message may include information for indicating the frequency offset factor. For example, the frequency offset factor provided by the M-plane message may be 0.5. Further, for example, the frequency offset factor provided by the M-plane message may be 0.25. Furthermore, for example, the frequency offset factor provided by the M-plane message may be 0.125.

According to an embodiment, the frequency offset value may be determined based on the following equation.

<Equation 7>

$$frequency\_offset = freqOffset \cdot \Delta f \cdot 0.5 \ \text{if} \ fractFreqMode == 0$$

$$frequency\_offset = freqOffset \cdot \Delta f \cdot 0.25 \ \text{else if} \ fractFreqMode == 1$$

$$frequency\_offset = freqOffset \cdot \Delta f \cdot 0.125 \ \text{else if} \ fractFreqMode == 2$$

'frequency_offset' indicates a frequency offset value to be applied. 'Δf' indicates an SCS provided by frame structure information of a C-plane message. 'freqOffset' denotes a value of bits of frequency offset information received from the C-plane message. 'fractFreqMode' indicates information for indicating a frequency offset factor included in the M-plane message. Here, the DU may transmit information for indicating the frequency offset factor to the RU, through an optional multi-vendor functionality of the O-RAN standard in the M-plane. For example, 'fractFreqMode' information may be added as an 'optimal multi-vendor' item.

As an example, the frequency offset information may consist of 24 bits. These 24 bits indicate a signed integer. When the 24 bits indicate 0, it may indicate that there is no offset; when the value of the 24 bits is in the range of 0x000001 to 0x7FFFFF (0x represents a hexadecimal number and F represents 15), the frequency offset information may indicate a positive frequency offset; and when the value of the 24 bits is in the range of 0x800000 to 0xFFFFFF, the frequency offset information may indicate a negative frequency offset.

In some other embodiments, the frequency offset information included in the C-plane message may be used to identify a frequency offset value based on frame structure information included in the C-plane message. The frame structure information included in the C-plane message may include FFT information for indicating an FFT/iFFT size used for IQ data processing and numerology information for indicating SCS. As described above, Table 4 may be used for the frame structure information. Table 5 may be used for FFT information. However, unlike Table 6, the numerology information may indicate the frequency offset factor as well as the SCS. For example, the following table may be used for the numerology information according to embodiments.

<Table 7>

| Value of IE "SCS" | 3GPP "μ" | Subcarrier spacing Δf | Number of slots per 1ms sub-frame: Nslot | Slot length |
|---|---|---|---|---|
| 0000b | 0 | 15 kHz | 1 | 1ms |
| 0001b | 1 | 30 kHz | 2 | 500μs |
| 0010b | 2 | 60 kHz | 4 | 250μs |
| 0011b | 3 | 120 kHz | 8 | 125μs |
| 0100b | 4 | 240 kHz | 16 | 62.5μs |
| 0101b | 5 | 480 kHz | 32 | 31.25μs |
| 0110b | 6 | 960 kHz | 64 | 15.625μs |
| 0111b | 2 | 60 kHz | 4 | 250μs |
| 1000b | 3 | 120 kHz | 8 | 125μs |
| 1001b | 4 | 240 kHz | 16 | 62.5μs |
| 1010b | 5 | 480 kHz | 32 | 31.25μs |
| 1011b | 6 | 960 kHz | 64 | 15.625μs |
| 1100b | NA | 1.25 kHz | 1 | 1ms |
| 1101b | NA | 3.75 kHz (LTE-specific) | 1 | 1ms |
| 1110b | NA | 5 kHz | 1 | 1ms |
| 1111b | NA | 7.5 kHz (LTE-specific) | 1 | 1ms |

When the value of bits of the numerology information is 2, the SCS may be 60 kHz and the frequency factor may be 0.5. However, when the value of the bits of the numerology information is 7 (=0111b), the SCS may be 60 kHz and the frequency factor may be 0.25. Further, for example, when the value of the bits of the numerology information is 3, the SCS may be 120 kHz and the frequency factor may be 0.5. However, when the value of the bits of the numerology information is 8 (=1000b), the SCS may be 120 kHz and the frequency factor may be 0.25. Further, for example, when the value of the bits of the numerology information is 4, the SCS may be 240 kHz and the frequency factor may be 0.5. However, when the value of the bits of the numerology information is 9 (=1001b), the SCS may be 240 kHz and the frequency factor may be 0.25. Further, for example, when the value of the bits of the numerology information is 5, the SCS may be 480 kHz and the frequency factor may be 0.5. However, when the value of the bits of the numerology information is 10 (=1010b), the SCS may be 480 kHz and the frequency factor may be 0.25. Further, for example, when the value of bits of the numerology information is 6, the SCS may be 960 kHz, and the frequency factor may be 0.5. However, when the value of the bits of the numerology information is **11** (=1011b), the SCS may be 960 kHz, and the frequency factor may be 0.25. The value of the bits of the numerology information may indicate the frequency factor. The Table 7 above may be represented by the following equation.

**\<Equation 8\>**

$$frequency\_offset = freqOffset \cdot \Delta f \cdot 0.25 \text{ if frameStructure[4:7]} == 7 \text{ or } 8 \text{ or } 9 \text{ or } 10 \text{ or } 11$$

$$frequency\_offset = freqOffset \cdot \Delta f \cdot 0.5 \text{ if otherwise frameStructure[4:7]}$$

'frameStructure[4:7]' denotes LSB 4-bit of the frame structure information, and also denotes bits for indicating an SCS. 'frequency_offset' indicates a frequency offset value to be applied. '$\Delta f$' indicates the SCS provided by the frame structure information of the C-plane message. 'freqOffset' denotes a value of bits of the frequency offset information received from the C-plane message.

As an example, the frequency offset information may consist of 24 bits. The 24 bits indicate a coded integer. When the 24 bits indicate 0, it indicates that there is no offset, and when the value of the 24 bits is in the range of 0x000001 to 0x7FFFFF, the frequency offset information may indicate a positive frequency offset, and when the value of the 24 bits is in the range of 0x800000 to 0xFFFFFF, the frequency offset information may indicate a negative frequency offset.

The Table 7 above is merely of an example of the frame structure information for defining an additional offset factor, and is not intended to be construed as limiting the embodiments. As shown in the Table 7, not all of the reserved bits in the Table 4 are used to indicate the additional SCSs (480 kHz, 960 kHz) and the frequency offset factor, but only some of the reserved bits in the Table 4 may be used to indicate the frequency offset factor. For example, the value of the bits for indicating the SCS may provide various frequency offset factors (e.g., 0.5, 0.25) only for the situations where an additional frequency offset factor is required (e.g., 240 kHz, 480 kHz, 960 kHz).

**\<Table 8\>**

| Value of IE "SCS" | 3GPP "$\mu$" | Subcarrier spacing $\Delta f$ | Number of slots per 1ms sub-frame: Nslot | Slot length |
|---|---|---|---|---|
| 0000b | 0 | 15 kHz | 1 | 1ms |
| 0001b | 1 | 30 kHz | 2 | 500$\mu$s |
| 0010b | 2 | 60 kHz | 4 | 250$\mu$s |
| 0011b | 3 | 120 kHz | 8 | 125$\mu$s |
| 0100b | 4 | 240 kHz | 16 | 62.5$\mu$s |
| 0101b | 5 | 480 kHz | 32 | 31.25$\mu$s |
| 0110b | 6 | 960 kHz | 64 | 15.625$\mu$s |
| 0111b | 4 | 240 kHz | 16 | 62.5$\mu$s |
| 1000b | 5 | 480 kHz | 32 | 31.25$\mu$s |
| 1001b | 6 | 960 kHz | 64 | 15.625$\mu$s |
| 1010b-1011b | NA | Reserved | Reserved | Reserved |
| 1100b | NA | 1.25 kHz | 1 | 1ms |
| 1101b | NA | 3.75 kHz (LTE-specific) | 1 | 1ms |
| 1110b | NA | 5 kHz | 1 | 1ms |
| 1111b | NA | 7.5 kHz (LTE-specific) | 1 | 1ms |

For another example, the value of bits to indicate the SCS may provide various frequency offset factors (e.g., 0.5, 0.25, 0.125) only for the situations that require additional frequency offset factors (e.g., 240 kHz, 480 kHz, 960 kHz).

**\<Table 9\>**

| Value of IE "SCS" | 3GPP "$\mu$" | Subcarrier spacing $\Delta f$ | Number of slots per 1ms sub-frame: Nslot | Slot length |
|---|---|---|---|---|
| 0000b | 0 | 15 kHz | 1 | 1ms |
| 0001b | 1 | 30 kHz | 2 | 500$\mu$s |
| 0010b | 2 | 60 kHz | 4 | 250$\mu$s |

(continued)

| Value of IE "SCS" | 3GPP "μ" | Subcarrier spacing Δf | Number of slots per 1ms sub-frame: Nslot | Slot length |
|---|---|---|---|---|
| 0011b | 3 | 120 kHz | 8 | 125μs |
| 0100b | 4 | 240 kHz | 16 | 62.5μs |
| 0101b | 5 | 480 kHz | 32 | 31.25μs |
| 0110b | 6 | 960 kHz | 64 | 15.625μs |
| 0111b | 4 | 240 kHz | 16 | 62.5μs |
| 1000b | 5 | 480 kHz | 32 | 31.25μs |
| 1001b | 6 | 960 kHz | 64 | 15.625μs |
| 1010b | 4 | 240 kHz | 16 | 62.5μs |
| 1011b | 5 | 480 kHz | 32 | 31.25μs |
| 1100b | NA | 1.25 kHz | 1 | 1ms |
| 1101b | NA | 3.75 kHz (LTE-specific) | 1 | 1ms |
| 1110b | NA | 5 kHz | 1 | 1ms |
| 1111b | NA | 7.5 kHz (LTE-specific) | 1 | 1ms |

When the SCS bits indicate 10, the SCS may be 240 kHz, and the frequency offset factor may be 0.125. When the SCS bits indicate 11, the SCS may be 480 kHz, and the frequency offset factor may be 0.125.

In the above Tables 7 to 9, the range of field values (e.g., frameStructure [4:7]) of bits for indicating the SCC indicates the frequency offset factor. In the Tables 7 to 9, irrespective of the value of the SCS, the field value indicates the frequency offset factor. However, the range of possible frequency offset factors may be dependent on the SCS. In other words, candidate values of the frequency offset factor required may vary depending on which SCS is used. For example, when the SCS is 120 kHz, only the frequency offset factor of 0.5 may be used. As another example, when the SCS is 480 kHz, the frequency offset factors having values of 0.5, 0.25, and 0.125 may be used. For example, the field value may indicate the SCS and the frequency offset factor according to the Table and the Equation as follows.

<Table 10>

| Value of IE "SCS" | 3GPP "μ" | Subcarrier spacing Δf | Number of slots per 1ms sub-frame: Nslot | Slot length |
|---|---|---|---|---|
| 0000b | 0 | 15 kHz | 1 | 1ms |
| 0001b | 1 | 30 kHz | 2 | 500μs |
| 0010b | 2 | 60 kHz | 4 | 250μs |
| 0011b | 3 | 120 kHz | 8 | 125μs |
| 0100b | 4 | 240 kHz | 16 | 62.5μs |
| 0101b | 5 | 480 kHz | 32 | 31.25μs |
| 0110b | 6 | 960 kHz | 64 | 15.625μs |
| 1001b | 4 | 240 kHz | 16 | 62.5μs |
| 1010b | 5 | 480 kHz | 32 | 31.25μs |
| 1011b | 6 | 960 kHz | 64 | 15.625μs |
| 1010b | 5 | 480 kHz | 32 | 31.25μs |
| 1011b | 6 | 960 kHz | 64 | 15.625μs |
| 1100b | NA | 1.25 kHz | 1 | 1ms |
| 1101b | NA | 3.75 kHz (LTE-specific) | 1 | 1ms |
| 1110b | NA | 5 kHz | 1 | 1ms |
| 1111b | NA | 7.5 kHz (LTE-specific) | 1 | 1ms |

**<Equation 9>**

$$frequency\_offset = freqOffset \cdot \Delta f \cdot 0.125 \text{ if frameStructure}[4{:}7] == 10 \text{ or } 11$$

$$frequency\_offset = freqOffset \cdot \Delta f \cdot 0.25 \text{ if frameStructure}[4{:}7] == 7 \text{ or } 8 \text{ or } 9$$

$$frequency\_offset = freqOffset \cdot \Delta f \cdot 0.5 \text{ if otherwise frameStructure}[4{:}7]$$

According to an additional embodiment, the frequency offset factor indicated by a field value of the bits for indicating the SCS may be associated with the SCS provided by the field value. The frequency offset factor(s) used may be fixed according to the SCS provided. For example, when the field value of the bits for indicating the SCS indicates the SCS of 240 kHz, the frequency offset may be 0.5 and 0.25. For another example, when the field value of the bits for indicating the SCS indicates the SCS of 480 kHz, the frequency offset may be 0.25 and 0.125. For another example, when the field value of the bits for indicating the SCS indicates the SCS of 960 kHz, the frequency offset may be 0.125 and 0.0625.

Within the same technical scope, some elements in the Tables 7 to 10 may be omitted or other mapping columns may be added.

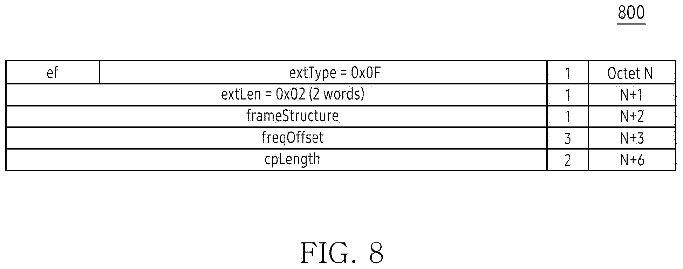

In FIG. 7, the frequency offset information included in the section information of the C-plane message is described as an example, but the frequency offset information may be included not only in the section information but also in the section extension information. Hereinafter, in FIG. 8, the section extension information including the frequency offset information will be described.

FIG. 8 illustrates an example 800 of section extension information according to embodiments. In FIG. 8, the section extension information for mixed-numerology information is illustrated. The C-plane message may include section information and section extension information. Here, the section type of the section information may be '5' or '6'. The C-plane message may be used for UE scheduling information (sectionType=5) or may be used for transmission of UE-specific channel information (sectionType=6).

Referring to FIG. 8, the section extension information may include 'extType' providing the extension type that provides additional parameters. The section extension information may include 'ef' for indicating whether there is another extension present or whether the current extension field is a last extension. The section extension information may include 'extLen' that provides a length of the section extension in units of 32-bit (or 4-byte) words.

The section extension information may include 'frameStructure' (e.g., the frame structure information of FIG. 7) for indicating a frame structure. The 'frameStructure' defines the FFT/iFFT size and the SCS. The section extension information may include 'cpLength'. The 'cpLength' is the number of samples (e.g., Ts= 1/30.72 MHz (megahertz)) to define a CP length. The section extension information may include 'freqOffset'. The 'freqOffset' according to embodiments defines a frequency offset for the carrier center frequency before additional filtering (e.g., in the case of PRACH) and FFT processing (in the case of UL), in units of frequency offset factors. Meanwhile, when the section extension information is applied to the section type 6 ('sectionType=6'), the value of 'FFT Size' in the frameStructure and cpLength may be set to '0'.

According to embodiments, the frequency offset information indicated by the section extension information may indicate a frequency offset value based on the schemes (e.g., Equation 7 to Equation 9, Table 7 to Table 10) mentioned with reference to FIG. 7. The frequency offset value corresponds to a product of the SCS value of the frequency offset information indicated by the section extension information and the frame structure information indicated by the section extension information, and the frequency offset factor. According to an embodiment, the frequency offset factor may be set based on the M-plane message. For example, for the M-plane message, 'fractFreqMode' information, which is an 'optimal multi-vendor' item, may indicate the frequency offset factor. According to an embodiment, the frequency offset factor may be set based on the C-plane message. For example, the LSB 4-bit of the frame structure information of the C-plane message may indicate the frequency offset factor.

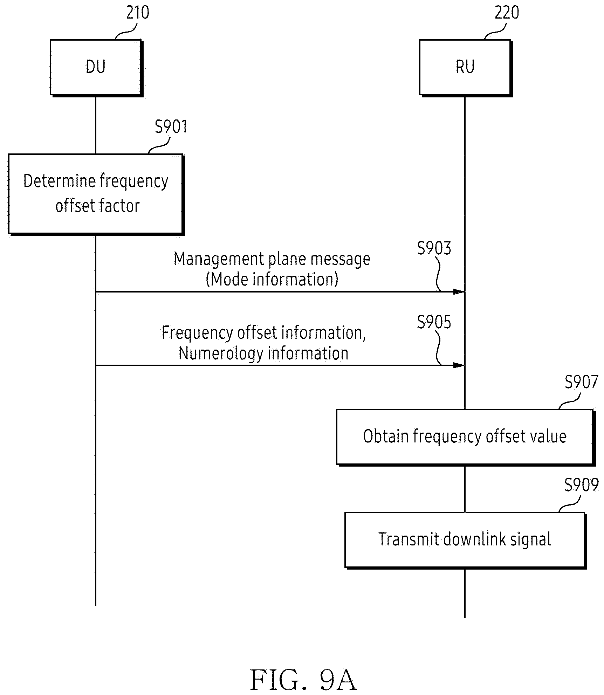

FIG. 9A illustrates an example of signaling between a DU and an RU for providing a frequency offset using a frequency offset factor through a management plane (M-plane) message and a C-plane message according to embodiments. The DU illustrates a DU 210 of FIG. 2A. According to an embodiment, the DU 210 may comprise an O-DU 251. The RU illustrates an RU 220 of FIG. 2A. According to an embodiment, the RU 220 may include an O-RU 253.

Referring to FIG. 9A, in operation S901, the DU 210 may determine a frequency offset factor. The frequency offset factor may be used to determine an offset unit for indicating a frequency position of a lowest resource element resource element (RE) #0 of a lowest resource block (RB #0) from a center frequency. The offset unit may be determined by a product of the frequency offset factor and the SCS. According to an embodiment, the frequency offset factor may be 0.5. According to an embodiment, the frequency offset factor may be 0.25. According to an embodiment, the frequency offset factor may be 0.125.

The frequency offset value indicates an actual frequency distance from the center frequency to RE #0 of the allocated RB #0. However, the center frequency is determined in an ARFCN unit, while the RE is determined in an SCS unit, and thus it may not be sufficient for the SCS unit to display the frequency offset value accurately. Accordingly, the DU 210 according to embodiments provides the frequency offset factor to the RU 220 through mode information. The frequency offset factor implies a fractional value applied to the SCS to indicate the frequency offset value.

In operation S903, the DU 210 may transmit a management plane (M-plane) message to the RU 220. The M-plane message may include mode information. The mode information may indicate the frequency offset factor. According to an embodiment, the M-plane message may indicate the frequency offset factor, through an optional multi-vendor functionality of the M-plane of the O-RAN standard. For example, 'fractFreqMode' information may be added as an 'optimal multi-vendor' item. For example, when the 'fractFreqMode' information is 0, the frequency offset factor is 0.5. When the 'fractFreqMode' information is 1, the frequency offset factor is 0.25. When the 'fractFreqMode' information is 2, the frequency offset factor is 0.125. Values of 3, 4, 5, 6, or 7 of the 'fractFreqMode' information may be reserved for further use.

In operation S905, the DU 210 may transmit the control plane (C-plane) message to the RU 220. The C-plane message may include frequency offset information and numerology information. The C-plane message may include frequency offset information. The frequency offset information may indicate, in an offset unit, a frequency domain from a carrier center frequency to a lowest RE resource element of a lowest RB. Here, the offset unit corresponds to a product of the frequency offset factor determined in operation S901 and the SCS provided by the numerology information of the C-plane message. The C-plane message may include numerology information. The numerology information refers to bits for indicating the SCS, among bits of the frame structure information of the C-plane message. The value of bits for indicating the SCS may indicate the SCS, by referring to the Tables 6 to 10.

In operation S907, the RU 220 may obtain a frequency offset value. The frequency offset value is a product of the SCS provided by the C-plane message, the frequency offset factor provided by mode information of the M-plane message, and the frequency offset information provided by the C-plane message.

In operation S909, the RU 220 may transmit a downlink signal. The RU 220 may generate an OFDM signal. The RU 220 may generate the downlink signal through modulation and up-conversion in the center frequency of the OFDM signal. The RU 220 may transmit the downlink signal to a user equipment (UE) in a cell. The RU 220 may transmit the downlink signal based on the frequency offset value. According to an embodiment, the downlink signal may include a synchronization signal. For example, the frequency band in which the downlink signal is transmitted may be FR 2 (or FR 2-1 or FR 2-2). The SCS of the synchronization signal may be 240 kHz, 480 kHz, or 960 kHz.

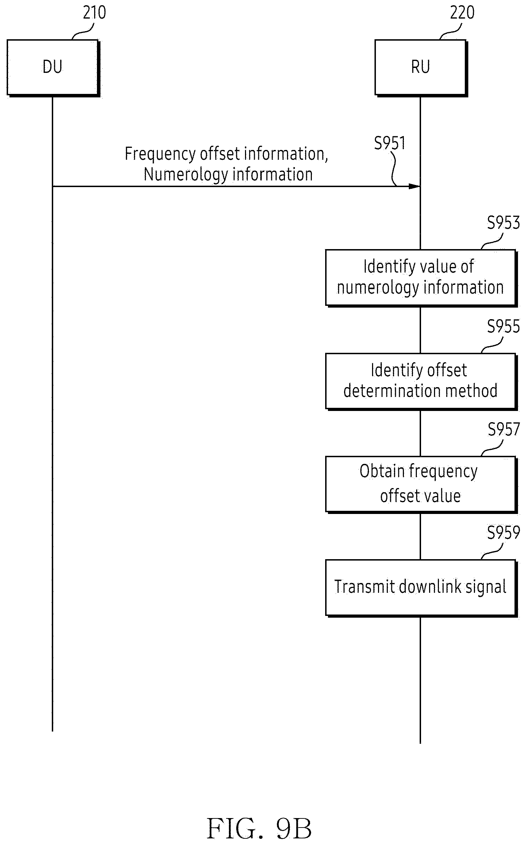

FIG. 9B illustrates an example of signaling between a DU and an RU for providing a frequency offset using a frequency offset factor through a C-plane message, according to embodiments. The DU illustrates the DU 210 of FIG. 2A. According to an embodiment, the DU 210 may include an O-DU 251. The RU illustrates the RU 220 of FIG. 2A. According to an embodiment, the RU 220 may include an O-RU 253.

Referring to FIG. 9B, in operation S951, the DU 210 may transmit a control plane message to the RU 220. The C-plane message may include frequency offset information and numerology information. The C-plane message may include the frequency offset information. The frequency offset information may indicate, in an offset unit, a frequency domain from the carrier center frequency to a lowest resource element (RE #0) of a lowest resource block (RB #0). Here, the offset unit corresponds to a product of the frequency offset factor determined in the operation S901 and the SCS provided by the numerology information of the C-plane message. The C-plane message may include the numerology information. The numerology information refers to bits for indicating the SCS, among bits of the frame structure information of the C-plane message. Values of bits for indicating the SCS may indicate the SCS, by referring to the Tables 7 to 10.

In operation S953, the RU 220 may identify a value of the numerology information. The numerology information of the C-plane message according to the embodiments may indicate a frequency offset factor. The frequency offset factor may be used to determine an offset unit for indicating a frequency position of the lowest resource element (RE) of the lowest resource block (RB) from the center frequency. The offset unit is a product of the frequency offset factor and the SCS. According to an embodiment, the frequency offset factor may be 0.5. According to an embodiment, the frequency offset factor may be 0.25. According to an embodiment, the frequency offset factor may be 0.125.

The frequency offset value indicates an actual frequency distance from the center frequency to RE #0 of the allocated RB #0. However, the center frequency is determined in the ARFCN unit, while the RE is determined in the SCS unit, and thus it may not be sufficient for the SCS unit to display the frequency offset value accurately. Accordingly, the DU 210 according to embodiments provides the frequency offset factor to the RU 220 through the numerology information of the C-plane message. The frequency offset factor refers to a fractional value applied to the SCS to indicate the frequency offset value.

In operation S955, the RU 220 may identify an offset determination method. The offset determination method may be dependent on an offset factor. The offset determination method specifies a frequency offset factor. The RU 220 may identify the frequency offset factor based on the value of the bits of the numerology information. According to embodiments, the value of the bits of the numerology information may indicate the frequency offset factor as well the SCS. Based on a range to which the values of the bits of the numerology information belong, the RU 220 may identify the frequency offset factor. For example, the RU 220 may identify the offset determination method according to the Equation 7.

In addition, for example, the RU 220 may identify the offset determination method according to the Equation 8. In addition, for example, the RU 220 may identify the offset determination method according to the Equation 9.

In operation S957, the RU 220 may obtain a frequency offset value. The frequency offset value is a product of the SCS provided by the C-plane message, the frequency offset factor provided by mode information of the M-plane message, and the frequency offset information provided by the C-plane message. The RU 220 may obtain the frequency offset value based on the offset determination method of the operation S955. The RU 220 may obtain the frequency offset value based on the frequency offset factor identified in the operation S955.

In operation S959, the DU 210 may transmit a downlink signal to the RU 220. The RU 220 may generate an OFDM signal. The RU 220 may generate the downlink signal through modulation and up-conversion in the center frequency of the OFDM signal. The RU 220 may transmit the downlink signal to a user equipment (UE) in a cell. The RU 220 may transmit the downlink signal based on the frequency offset value. According to an embodiment, the downlink signal may include a synchronization signal. For example, the frequency band in which the downlink signal is transmitted may be FR 2 (or FR 2-1 or FR 2-2). The SCS of the synchronization signal may be 240 kHz, 480 kHz, or 960 kHz.

In FIGS. 7 to 9B, the embodiments of providing the frequency offset through the C-plane message have been described, but the embodiments of the disclosure are not limited thereto. According to another embodiment, the frequency offset factor may be indicated only by the M-plane message. The frequency offset factor basically configured by the M-plane message may be 0.5, 0.25, or 0.125. The frequency offset factor basically configured by the M-plane message may be dependent upon the center of the SCS or the channel bandwidth basically configured.

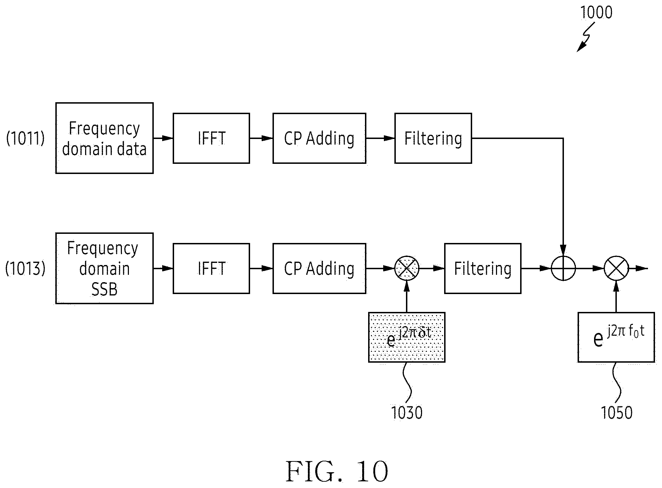

FIG. 10 illustrates an example 1000 of signal processing of an RU in mixed numerology channels, according to embodiments. The RU illustrates the RU 220 of FIG. 2A. According to an embodiment, the RU 220 may include an O-RU 253.

Referring to FIG. 10, the RU may perform IFFT and CP adding to a data signal 1011. The RU may perform filtering. The RU may perform IFFT and CP adding to a synchronization signal 1013 (e.g., SSB). Before performing the filtering, the RU may perform compensation 1030 on a frequency transition component.

A unit for searching for a center frequency of the data signal 1011 is 60 kHz in FR 2. A unit for searching for the synchronization signal 1013 is 17280 kHz in FR 2. According to the 3GPP standard, the up-conversion of the synchronization signal 1013 is performed based on a carrier center frequency, and the carrier center frequency is identified in a unit of 60 kHz. Accordingly, in a distance between the center frequency of the synchronization signal 1013 and the center frequency of the data signal 1011, the remaining portion may exist in addition to a portion distinguished by a multiple of the SCS. This remaining portion is subject to compensation.

As described through the Equations 3 to 5, a compensation target ($\delta$) corresponds to the time frequency conversion. Therefore, the compensation 1030 may be performed in the RU. As seen in the Equation 5, the frequency may be shifted by a correction value ($\delta$) with respect to on the center frequency ($f_0$) of the system bandwidth from the system bandwidth component ($e^{j2\pi f0 t}$) and the frequency shift component ($e^{j2\pi \delta t}$).

The RU may receive frequency offset information from the DU through the fronthaul interface of the O-RAN. The RU may identify a frequency offset value based on the frequency offset information. The RU may determine a compensation component (e.g., a frequency shift component ($e^{j2\pi \delta t}$)) based on the frequency offset value. The RU may perform the compensation 1030 of the synchronization signal 1013 based on the compensation component. For example, the RU may perform the compensation 1030 of the synchronization signal 1013 by multiplying by $e^{j2\pi \delta t}$ in a sampling unit of a time unit. The RU may perform filtering after compensation for the synchronization signal 1013.

The RU may perform up-conversion 1050 on a synthesized signal including a filtered data signal and a filtered synchronization signal. The up-conversion 1050 may be performed based on a carrier frequency (or a carrier center frequency). For example, the RU may perform the up-conversion 1050 of the synthesized signal by multiplying the synthesized signal by $e^{j2\pi f0 t}$. The RU may output a downlink signal after performing the up-conversion 1050.

According to embodiments of the disclosure, the RU may obtain an accurate frequency offset by using a frequency offset factor of a message received from the DU, instead of using a fixed frequency offset factor.

According to embodiments, a method performed by a radio unit (RU) may comprise receiving, from a distributed unit (DU), a control plane (C-plane) message including frequency offset information and frame structure information for indicating a subcarrier spacing (SCS). The method may comprise identifying a frequency offset factor among a plurality of frequency offset factors. The method may comprise obtaining a frequency offset value corresponding to a product of the frequency offset information, the SCS, and the frequency offset factor. The method may comprise transmitting downlink signals based on the frequency offset value. The plurality of frequency offset factors may include '0.5' and '0.25'.

According to an embodiment, the method may further include receiving, from the DU, a management plane (M-plane) message including mode information indicating the frequency offset factor.

According to an embodiment, the frame structure information may include bits indicating the SCS. In case that a value of the bits belongs to a first range, the identified frequency offset factor may be '0.5'. In case that a value of the bits belongs to a second range different from the first range, the identified frequency offset factor may be '0.5'.

According to an embodiment, the plurality of frequency offset factors may further include '0.125' and '0.0625'.

According to an embodiment, a section type of the C-plane message may be section type 3 used for physical random access channel (PRACH) and mixed-numerology channels, and the frame structure information may be included in the section information of the C-plane message. Alternatively, a section type of the C-plane message may be section type 5 for user equipment (UE) scheduling information or section type 6 for transmitting UE channel information, and the frame structure information may be included in the section extension information of the C-plane message.

According to embodiments, a method performed by a distributed unit (DU) may comprise determining frequency offset information related to a frequency offset factor among a plurality of frequency offset factors. The method may comprise transmitting, to a radio unit (RU), a control plane (C-plane) message including section information for downlink signals, the frequency offset information, and frame structure information for indicating a subcarrier spacing (SCS). The frequency offset factor may be provided to the RU by a management plane (M-plane) message or the C-plane message. The frequency offset value applied to the downlink signals may correspond to a product of the frequency offset information, the SCS, and the frequency offset factor. The plurality of frequency offset factors may include '0.5' and '0.25'.

According to an embodiment, the method may further comprise transmitting the M-plane message, to the RU. The M-plane message may include mode information indicating the frequency offset factor.

According to an embodiment, the frame structure information may include bits indicating the SCS. In case that a value of the bits belongs to a first range, the identified frequency offset factor may be '0.5'. In case that a value of the bits belongs to a second range different from the first range, the identified frequency offset factor may be '0.5'.

According to an embodiment, the plurality of frequency offset factors may further include '0.125' and '0.0625'.

According to an embodiment, a section type of the C-plane message may be section type 3 used for physical random access channel (PRACH) and mixed-numerology channels, and the frame structure information may be included in the section information of the C-plane message. Alternatively, a section type of the C-plane message may be section type 5 for user equipment (UE) scheduling information or section type 6 for transmitting UE channel information, and the frame structure information may be included in the section extension information of the C-plane message.

According to embodiments, an electronic device of a radio unit (RU) may comprise at least one fronthaul transceiver, at least one radio frequency (RF) transceiver, at least one processor coupled to the at least one fronthaul transceiver and the at least one RF transceiver. The at least one processor may be configured to receive, from a distributed unit (DU), a control plane (C-plane) message including frequency offset information and frame structure information for indicating a subcarrier spacing (SCS). The at least one processor may be configured to identify a frequency offset factor among a plurality of frequency offset factors. The at least one processor may be configured to obtain a frequency offset value corresponding to a product of the frequency offset information, the SCS, and the frequency offset factor. The at least one processor may be configured to transmit downlink signals based on the frequency offset value. The plurality of frequency offset factors may include '0.5' and '0.25'.

According to an embodiment, the at least one processor may be further configured to receive, from the DU, a management plane (M-plane) message including mode information indicating the frequency offset factor.

According to an embodiment, the frame structure information may include bits indicating the SCS. In case that a value of the bits belongs to a first range, the identified frequency offset factor may be '0.5'. In case that a value of the bits belongs to a second range different from the first range, the identified frequency offset factor may be '0.5'.

According to an embodiment, the plurality of frequency offset factors may further include '0.125' and '0.0625'.

According to an embodiment, a section type of the C-plane message may be section type 3 used for physical random access channel (PRACH) and mixed-numerology channels, and the frame structure information may be included in the section information of the C-plane message. Alternatively, a section type of the C-plane message may be section type 5 for user equipment (UE) scheduling information or section type 6 for transmitting UE channel information, and the frame structure information may be included in the section extension information of the C-plane message

According to embodiments, an electronic device of a distributed unit (DU) may comprise at least one transceiver and at least one processor coupled to the at least one transceiver. The at least one processor may be configured to determine frequency offset information related to a frequency offset factor among a plurality of frequency offset factors. The at least one processor may be configured to transmit, to a radio unit (RU), a control plane (C-plane) message including section information for downlink signals, the frequency offset information, and frame structure information for indicating a subcarrier spacing (SCS). The frequency offset factor may be provided to the RU by a management plane (M-plane) message or the C-plane message. The frequency offset value applied to the downlink signals may correspond to a product of the frequency offset information, the SCS, and the frequency offset factor. The plurality of frequency offset factors may include '0.5' and '0.25'.

According to an embodiment, the at least one processor may be further configured to transmit the M-plane message, to the RU. The M-plane message may include mode information indicating the frequency offset factor.

According to an embodiment, the frame structure information may include bits indicating the SCS. In case that a value of the bits belongs to a first range, the identified frequency offset factor may be '0.5'. In case that a value of the bits belongs to a second range different from the first range, the identified frequency offset factor may be '0.5'.

According to an embodiment, the plurality of frequency offset factors may further include '0.125' and '0.0625'.

According to an embodiment, a section type of the C-plane message may be section type 3 used for physical random access channel (PRACH) and mixed-numerology channels, and the frame structure information may be included in the section information of the C-plane message. Alternatively, a section type of the C-plane message may be section type 5 for user equipment (UE) scheduling information or section type 6 for transmitting UE channel information, and the frame structure information may be included in the section extension information of the C-plane message.

The methods according to various embodiments described in the specification or claims of the disclosure may be implemented in hardware, software, or a combination of hardware and software.

When implemented as software, a computer-readable storage medium storing one or more programs (software modules) may be provided. One or more programs stored in the computer-readable storage medium are configured for execution by one or more processors in an electronic device. The one or more programs include instructions that cause the electronic device to execute methods according to embodiments described in the specification or claims of the disclosure.

These programs (software modules or software) may be stored in a random access memory, a non-volatile memory including a flash memory, a read only memory (ROM), an electrically erasable programmable read only memory (EEPROM), a magnetic disc storage device, a compact disc ROM (CD-ROM), digital versatile discs (DVDs), other types of optical storage devices, magnetic cassettes, or the like. Alternatively, it may be stored in a memory configured by a combination of some or all of those. In addition, a plurality of respective constituent memories may be included.

Further, the program may be stored in an attachable storage device that is accessible via a communication network such as e.g., Internet, Intranet, a local area network (LAN), a wide area network (WLAN), or a storage area network (SAN), or a communication network configured with a combination of those. Such a storage device may make access to a device performing an embodiment of the disclosure via an external port. In addition, a separate storage device on a communication network may access the device performing embodiments of the disclosure.

In the above-described specific embodiments of the disclosure, an element included in the disclosure is expressed in a singular or plural form depending on a presented specific embodiment. However, the singular form or plural form is selected to suit its presented situation for the convenience of description, and the disclosure is not limited to the singular element or the plural element presented, and either a component expressed in plural may be configured in a singular form or a component expressed in singular may be configured in a plural form.

While specific embodiments have been described in the detailed description of the present disclosure, it will be apparently understood that many variations are possible without departing from the scope of the present disclosure.

**Claims**

1. A method performed by a radio unit (RU), the method comprising:

   receiving, from a distributed unit (DU), a control plane (C-plane) message including frequency offset information and frame structure information for indicating a subcarrier spacing (SCS);
   identifying a frequency offset factor among a plurality of frequency offset factors;
   obtaining a frequency offset value corresponding to a product of the frequency offset information, the SCS, and the frequency offset factor; and
   transmitting downlink signals based on the frequency offset value,
   wherein the plurality of frequency offset factors includes '0.5' and '0.25'.

2. The method of claim 1, further comprising:
   receiving, from the DU, a management plane (M-plane) message including mode information indicating the frequency offset factor.

3. The method of claim 1,

   wherein the frame structure information includes bits indicating the SCS,
   wherein, in case that a value of the bits belongs to a first range, the identified frequency offset factor is '0.5', and
   wherein, in case that a value of the bits belongs to a second range different from the first range, the identified frequency offset factor is '0.5'.

4. The method of claim 1,
   wherein the plurality of frequency offset factors further includes '0.125' and '0.0625'.

5. The method of claim 1,

wherein a section type of the C-plane message is section type 3 used for physical random access channel (PRACH) and mixed-numerology channels, and the frame structure information is included in the section information of the C-plane message, or

wherein a section type of the C-plane message is section type 5 for user equipment (UE) scheduling information or section type 6 for transmitting UE channel information, and the frame structure information is included in the section extension information of the C-plane message.

6. A method performed by a distributed unit (DU), the method comprising:

determining frequency offset information related to a frequency offset factor among a plurality of frequency offset factors; and

transmitting, to a radio unit (RU), a control plane (C-plane) message including section information for downlink signals, the frequency offset information, and frame structure information for indicating a subcarrier spacing (SCS),

wherein the frequency offset factor is provided to the RU by a management plane (M-plane) message or the C-plane message,

wherein a frequency offset value applied to the downlink signals corresponds to a product of the frequency offset information, the SCS, and the frequency offset factor, and

wherein the plurality of frequency offset factors includes '0.5' and '0.25'.

7. The method of claim 6, further comprising:

transmitting the M-plane message, to the RU,

wherein the M-plane message includes mode information indicating the frequency offset factor.

8. The method of claim 6,

wherein the frame structure information includes bits indicating the SCS,

wherein, in case that a value of the bits belongs to a first range, the identified frequency offset factor is '0.5', and

wherein, in case that a value of the bits belongs to a second range different from the first range, the identified frequency offset factor is '0.5'.

9. The method of claim 6,

wherein the plurality of frequency offset factors further includes '0.125' and '0.0625'.

10. The method of claim 6,

wherein a section type of the C-plane message is section type 3 used for physical random access channel (PRACH) and mixed-numerology channels, and the frame structure information is included in the section information of the C-plane message, or

wherein a section type of the C-plane message is section type 5 for user equipment (UE) scheduling information or section type 6 for transmitting UE channel information, and the frame structure information is included in the section extension information of the C-plane message.

11. An electronic device of a radio unit (RU), comprising:

at least one fronthaul transceiver;

at least one radio frequency (RF) transceiver;

at least one processor coupled to the at least one fronthaul transceiver and the at least one RF transceiver,

wherein the at least one processor is configured to:

receive, from a distributed unit (DU), a control plane (C-plane) message including frequency offset information and frame structure information for indicating a subcarrier spacing (SCS);

identify a frequency offset factor among a plurality of frequency offset factors;

obtain a frequency offset value corresponding to a product of the frequency offset information, the SCS, and the frequency offset factor; and

transmit downlink signals based on the frequency offset value,

wherein the plurality of frequency offset factors includes '0.5' and '0.25'.

12. The electronic device of claim 11, wherein the at least one processor is configured to perform one of methods 2 to 5.

13. An electronic device of a distributed unit (DU), comprising:

at least one fronthaul transceiver;
at least one radio frequency (RF) transceiver;
at least one processor coupled to the at least one fronthaul transceiver and the at least one RF transceiver, wherein the at least one processor is configured to:

determine frequency offset information related to a frequency offset factor among a plurality of frequency offset factors; and
transmit, to a radio unit (RU), a control plane (C-plane) message including section information for downlink signals, the frequency offset information, and frame structure information for indicating a subcarrier spacing (SCS),
wherein the frequency offset factor is provided to the RU by a management plane (M-plane) message or the C-plane message,
wherein a frequency offset value applied to the downlink signals corresponds to a product of the frequency offset information, the SCS, and the frequency offset factor, and
wherein the plurality of frequency offset factors includes '0.5' and '0.25'.

14. The electronic device of claim 13, wherein the at least one processor is configured to perform one of methods 7 to 10.

FIG. 1

110

210 215 220

DU ———— RU

FIG. 2A

110

251

eNB/gNB

O-DU

LLS-C    LLS-U

LLS-C    LLS-U

O-RU    · · ·    O-RU

253-1                    253-n

FIG. 2B

FIG. 3A

220

RU

RF TRANSCEIVER  360

FRONTHAUL TRANSCEIVER  365

MEMORY  370

PROCESSOR  380

FIG. 3B

FIG. 4

500

Center frequency candidates of data (ARFCN)
(510)

17.28 MHz

60 kHz

Center frequency candidates of synchronization signal (GSCN)
(520)

FIG. 5

FIG. 6

700

| Section Type 3 : PRACH & mixed-numerology | | | | | | | | | |
|---|---|---|---|---|---|---|---|---|---|
| 0 (msb) | 1 | 2 | 3 | 4 | 5 | 6 | 7 (1sb) | # of bytes | |
| transport header, see clause 5. 1. 3 | | | | | | | | 8 | Octet 1 |
| dataDirection | payloadVersion | | | filterIndex | | | | 1 | Octet 9 |
| frameId | | | | | | | | 1 | Octet 10 |
| subframeId | | | | slotId | | | | 1 | Octet 11 |
| slotId | | startSymbolId | | | | | | 1 | Octet 12 |
| numberOfsections | | | | | | | | 1 | Octet 13 |
| sectionType = 3 | | | | | | | | 1 | Octet 14 |
| timeOffset | | | | | | | | 2 | Octet 15 |
| frameStructure | | | | | | | | 1 | Octet 17 |
| cpLength | | | | | | | | 2 | Octet 18 |
| udCompHdr | | | | | | | | 1 | Octet 20 |
| sectionId | | | | | | | | 1 | Octet 21 |
| sectionId | | | rb | symInc | startPrbc | | | 1 | Octet 22 |
| startPrbc | | | | | | | | 1 | Octet 23 |
| numPrbc | | | | | | | | 1 | Octet 24 |
| reMask[11:4] | | | | | | | | 1 | Octet 25 |
| reMask[3:0] | | numSymbol | | | | | | 1 | Octet 26 |
| ef | | beamId[14:8] | | | | | | 1 | Octet 27 |
| beamId[7:0] | | | | | | | | 1 | Octet 28 |
| freqOffset | | | | | | | | 3 | Octet 29 |
| reserved (8 bits) | | | | | | | | 1 | Octet 32 |
| Section Extensions as indicated by "ef" | | | | | | | | var | Octet 33 |
| . . . | | | | | | | | | |
| sectionId | | | | | | | | 1 | Octet N |
| sectionId | | | rb | symInc | startPrbc | | | 1 | N+1 |
| startPrbc | | | | | | | | 1 | N+2 |
| numPrbc | | | | | | | | 1 | N+3 |
| reMask [11:4] | | | | | | | | 1 | N+4 |
| reMask [3:0] | | numSymbol | | | | | | 1 | N+5 |
| ef | | beamId[14:8] | | | | | | 1 | N+6 |
| beamId[7:0] | | | | | | | | 1 | N+7 |
| freqOffset | | | | | | | | 3 | N+8 |
| reserved (8 bits) | | | | | | | | 1 | N+11 |
| Section Extensions as indicated by "ef" | | | | | | | | var | N+12 |
| | | | | | | | | | Octet M |

FIG. 7

<u>800</u>

| ef | extType = 0x0F | 1 | Octet N |
|---|---|---|---|
| extLen = 0x02 (2 words) | | 1 | N+1 |
| frameStructure | | 1 | N+2 |
| freqOffset | | 3 | N+3 |
| cpLength | | 2 | N+6 |

FIG. 8

210

DU

S901

Determine frequency
offset factor

Management plane message
(Mode information)
S903

Frequency offset information,
Numerology information
S905

220

RU

S907

Obtain frequency offset value

S909

Transmit downlink signal

FIG. 9A

210

DU

220

RU

Frequency offset information,
Numerology information

S951

S953

Identify value of
numerology information

S955

Identify offset
determination method

S957

Obtain frequency
offset value

S959

Transmit downlink signal

FIG. 9B

1000

(1011) | Frequency domain data | → | IFFT | → | CP Adding | → | Filtering |

(1013) | Frequency domain SSB | → | IFFT | → | CP Adding | → | ⊗ | → | Filtering | → ⊕ → ⊗ →

$e^{j2\pi\delta t}$

1030

$e^{j2\pi f_0 t}$

1050

FIG. 10

# EP 4 529 110 A1

<table>
<tr><td colspan="2">INTERNATIONAL SEARCH REPORT</td><td colspan="2">International application No.<br>**PCT/KR2023/006644**</td></tr>
</table>

**A. CLASSIFICATION OF SUBJECT MATTER**

**H04L 27/26**(2006.01)i

According to International Patent Classification (IPC) or to both national classification and IPC

**B. FIELDS SEARCHED**

Minimum documentation searched (classification system followed by classification symbols)

H04L 27/26(2006.01); H04L 29/06(2006.01); H04L 5/00(2006.01); H04W 16/28(2009.01); H04W 28/02(2009.01); H04W 40/02(2009.01); H04W 72/04(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: DU(distributed unit), RU(radio unit), 프론트홀(fronthaul), 주파수 오프셋(frequency offset), 부반송파 간격(subcarrier spacing, SCS), 팩터(factor)

**C. DOCUMENTS CONSIDERED TO BE RELEVANT**

| Category* | Citation of document, with indication, where appropriate, of the relevant passages | Relevant to claim No. |
|---|---|---|
| A | WO 2022-060180 A1 (SAMSUNG ELECTRONICS CO., LTD.) 24 March 2022 (2022-03-24)<br>See paragraphs [0010]-[0011]; and claims 1-3 and 7-9. | 1-14 |
| A | US 2021-0007039 A1 (COMMSCOPE TECHNOLOGIES LLC) 07 January 2021 (2021-01-07)<br>See paragraphs [0060]-[0066] and [0157]-[0161]. | 1-14 |
| A | US 2021-0392657 A1 (MAVENIR NETWORKS, INC.) 16 December 2021 (2021-12-16)<br>See claims 1-12. | 1-14 |
| A | WO 2022-116026 A1 (ZTE CORPORATION) 09 June 2022 (2022-06-09)<br>See claims 1-52. | 1-14 |
| A | KR 10-2021-0046486 A (SAMSUNG ELECTRONICS CO., LTD.) 28 April 2021 (2021-04-28)<br>See paragraphs [0079]-[0170]; and figures 5-12. | 1-14 |

☐ Further documents are listed in the continuation of Box C.   ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>**19 September 2023** | Date of mailing of the international search report<br>**19 September 2023** |
| Name and mailing address of the ISA/KR<br><br>**Korean Intellectual Property Office**<br>**Government Complex-Daejeon Building 4, 189 Cheongsa-**<br>**ro, Seo-gu, Daejeon 35208** | Authorized officer |
| Facsimile No. **+82-42-481-8578** | Telephone No. |

Form PCT/ISA/210 (second sheet) (July 2022)

| INTERNATIONAL SEARCH REPORT | International application No. |
| Information on patent family members | **PCT/KR2023/006644** |

| Patent document cited in search report | | | Publication date (day/month/year) | Patent family member(s) | | | Publication date (day/month/year) |
|---|---|---|---|---|---|---|---|
| WO | 2022-060180 | A1 | 24 March 2022 | AU | 2021-343338 | A1 | 04 May 2023 |
| | | | | CN | 116158166 | A | 23 May 2023 |
| | | | | EP | 4203588 | A1 | 28 June 2023 |
| | | | | KR | 10-2022-0037305 | A | 24 March 2022 |
| | | | | US | 2023-0224118 | A1 | 13 July 2023 |
| US | 2021-0007039 | A1 | 07 January 2021 | CN | 114208102 | A | 18 March 2022 |
| | | | | CN | 114223171 | A | 22 March 2022 |
| | | | | CN | 114884635 | A | 09 August 2022 |
| | | | | CN | 116318595 | A | 23 June 2023 |
| | | | | EP | 3994846 | A1 | 11 May 2022 |
| | | | | EP | 3994847 | A1 | 11 May 2022 |
| | | | | EP | 3994852 | A1 | 11 May 2022 |
| | | | | JP | 2022-538656 | A | 05 September 2022 |
| | | | | JP | 2022-538891 | A | 06 September 2022 |
| | | | | JP | 2023-052569 | A | 11 April 2023 |
| | | | | US | 2021-0006371 | A1 | 07 January 2021 |
| | | | | US | 2021-0006944 | A1 | 07 January 2021 |
| | | | | US | 2022-0174577 | A1 | 02 June 2022 |
| | | | | US | 2022-0256432 | A1 | 11 August 2022 |
| | | | | US | 2023-0131685 | A1 | 27 April 2023 |
| | | | | WO | 2021-003278 | A1 | 07 January 2021 |
| | | | | WO | 2021-003283 | A1 | 07 January 2021 |
| | | | | WO | 2021-003285 | A1 | 07 January 2021 |
| US | 2021-0392657 | A1 | 16 December 2021 | US | 11212818 | B2 | 28 December 2021 |
| | | | | US | 2019-0254047 | A1 | 15 August 2019 |
| WO | 2022-116026 | A1 | 09 June 2022 | EP | 4082150 | A1 | 02 November 2022 |
| | | | | JP | 2023-522532 | A | 31 May 2023 |
| | | | | US | 2022-0360481 | A1 | 10 November 2022 |
| KR | 10-2021-0046486 | A | 28 April 2021 | CN | 114556804 | A | 27 May 2022 |
| | | | | EP | 4018752 | A1 | 29 June 2022 |
| | | | | JP | 2022-553032 | A | 21 December 2022 |
| | | | | US | 11166271 | B2 | 02 November 2021 |
| | | | | US | 2021-0120531 | A1 | 22 April 2021 |
| | | | | US | 2022-0053472 | A1 | 17 February 2022 |
| | | | | WO | 2021-075935 | A1 | 22 April 2021 |

Form PCT/ISA/210 (patent family annex) (July 2022)